# EUROPEAN PATENT APPLICATION

(11) **EP 4 838 751 A1**
(43) Date of publication of application: **11.11.2026**
(21) Application number: 24919880.5
(22) Date of filing: 22.11.2024
(51) Int. Cl.: H02J 7/04, B60L 53/31

(54) **POWER DISTRIBUTION DEVICE AND CHARGING PILE**

(30) Priority: 22.01.2024 CN 202410086710
(71) Applicant: Huawei Digital Power Technologies Co., Ltd., Shenzhen, Guangdong 518043 (CN)
(72) Inventor: YIN, Boyuan, Shenzhen, Guangdong 518043 (CN); DUAN, Zhenglong, Shenzhen, Guangdong 518043 (CN); DENG, Ziming, Shenzhen, Guangdong 518043 (CN); LI, Xiangsong, Shenzhen, Guangdong 518043 (CN); MA, Cheng, Shenzhen, Guangdong 518043 (CN)
(74) Representative: Maiwald GmbH
(86) International application number: PCT/CN2024/133805
(87) International publication number: WO 2025/156800

(57) **Abstract**

This application provides a power distribution apparatus and a charging pile. The power distribution apparatus includes at least one power distribution module. The power distribution module includes M groups of power terminals, M groups of load terminals, and (M - 1) groups of switches. M is an integer greater than or equal to 2. The M groups of power terminals are directly connected to the M groups of load terminals in a one-to-one correspondence. An m1^{th} group of switches in the (M - 1) groups of switches is connected between an m1^{th} group of power terminals and an (m1 + 1)^{th} group of load terminals, where 1 ≤ m1 ≤ (M - 1), and m1 is an integer; or an m2^{th} group of switches in the (M - 1) groups of switches is connected between an m2^{th} group of power terminals and an (m2 - 1)^{th} group of load terminals, where 2 ≤ m2 ≤ M, and m2 is an integer. A quantity of switches in the power distribution apparatus designed in this application is reduced, so that a size and costs of the power distribution apparatus can be reduced.

## Description

This application claims priority to Chinese Patent Application No. 202410086710.4, filed with the China National Intellectual Property Administration on January 22, 2024 and entitled "POWER DISTRIBUTION APPARATUS AND CHARGING PILE", which is incorporated herein by reference in its entirety.

### TECHNICAL FIELD

This application relates to the charging field, and in particular, to a power distribution apparatus and a charging pile.

### BACKGROUND

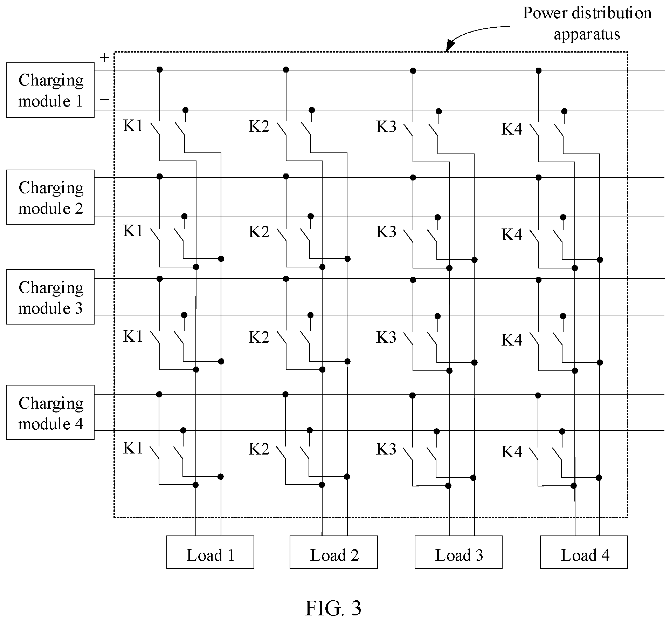

As new energy vehicles rapidly develop, electric vehicle charging devices used as ancillary facilities are increasingly widely used. During current actual application, a power distribution apparatus may dynamically distribute, based on charging powers actually required by vehicles, direct currents output by a plurality of charging modules in a charging device. At present, most power distribution apparatuses use a full-matrix power distribution architecture. That is, a switching device is disposed at each power routing node to perform power distribution. For example, FIG. 3 shows that a power distribution apparatus is connected to four charging modules and four loads. The power distribution apparatus needs to be provided with 16 groups of switches. Each charging module is connected to each load through one group of switches K1 to K4. A controller controls the switches K1 to K4 to be turned on or turned off, to control whether the power distribution apparatus outputs power to the load. However, there are a large quantity of switches in the full-matrix architecture, resulting in a large size and high costs of the power distribution architecture.

### SUMMARY

This application provides a power distribution apparatus and a charging pile. When each power distribution module in the power distribution apparatus includes M groups of power terminals and M groups of load terminals, the power distribution module designed in this application needs to include only (M - 1) groups of switches, to reduce a quantity of switches in the power distribution apparatus, so that a size and costs of the power distribution apparatus can be reduced. In addition, even if the quantity of switches in the power distribution apparatus is reduced, each charging module connected to the power distribution apparatus can still supply power to each load connected to the power distribution apparatus, that is, any charging module can be scheduled to any load. This ensures that charging flexibility reaches 100%, to meet actual power requirements of different loads.

According to a first aspect, a power distribution apparatus is provided. The power distribution apparatus includes at least one power distribution module. The power distribution module includes M groups of power terminals, M groups of load terminals, and (M - 1) groups of switches. Each group of switches includes two switches. One of the two switches is connected between a positive electrode of the power terminal and a positive electrode of the load terminal. The other of the two switches is connected between a negative electrode of the power terminal and a negative electrode of the load terminal. The power terminal is configured to connect to a charging module. The load terminal is configured to connect to a load. M is an integer greater than or equal to 2. The M groups of power terminals are directly connected to the M groups of load terminals in a one-to-one correspondence. An m1^{th} group of switches in the (M - 1) groups of switches is connected between an m1^{th} group of power terminals and an (m1 + 1)^{th} group of load terminals, where 1 ≤ m1 ≤ (M - 1), and m1 is an integer; or an m2^{th} group of switches in the (M - 1) groups of switches is connected between an m2^{th} group of power terminals and an (m2 - 1)^{th} group of load terminals, where 2 ≤ m2 ≤ M, and m2 is an integer.

In this embodiment of this application, when the power distribution module includes M groups of power terminals and M groups of load terminals, the power distribution module designed in this application needs to include only (M - 1) groups of switches, to reduce a quantity of switches in the power distribution apparatus, so that a size and costs of the power distribution apparatus can be reduced. Even if the quantity of switches in the power distribution apparatus is reduced, because the M groups of power terminals are directly connected to the M groups of load terminals in a one-to-one correspondence, and the (M - 1) groups of switches each are connected between the m1^{th} group of power terminals and the (m1 + 1)^{th} group of load terminals or between the m2^{th} group of power terminals and the (m2 - 1)^{th} group of load terminals, each charging module connected to the power distribution apparatus can still supply power to each load connected to the power distribution apparatus, that is, any charging module can be scheduled to any load. This ensures that the charging flexibility reaches 100%, to meet the actual power requirements of different loads. In addition, in a same charging scenario, in comparison with a full-matrix power distribution architecture, in this embodiment of this application, a quantity of switches that need to be turned on is reduced, that is, a quantity of switching times for switch scheduling is reduced, and switch control is simpler.

In addition, in this embodiment of this application, a maximum current allowed by switches is a sum of rated currents of some of charging modules connected to the power distribution module. Especially, when rated direct currents output by all charging modules are consistent, a maximum current allowed by each group of switches is a sum of rated currents of (M - 1) charging modules, so that specifications of the switches in the power distribution module can be normalized, to facilitate switch selection.

With reference to the first aspect, in a possible design, the power distribution module further includes a group of switches. The group of switches is connected between a 1^{st} group of power terminals and an M^{th} group of load terminals; or the group of switches is connected between an M^{th} group of power terminals and a 1^{st} group of load terminals.

In this embodiment of this application, the group of switches included in the power distribution module is connected between the 1^{st} group of power terminals and the M^{th} group of load terminals or between the M^{th} group of power terminals and the 1^{st} group of load terminals. When a charging module connected to the 1^{st} group of power terminals supplies power to a load connected to the M^{th} group of load terminals, or when a charging module connected to the M^{th} group of power terminals supplies power to a load connected to the 1^{st} group of load terminals, the quantity of switches that are turned on can be reduced, to simplify a power supply path. Especially, when there are a large quantity of power terminals and a large quantity of load terminals, advantages of the group of switches added in this embodiment of this application are more distinct.

With reference to the first aspect, in a possible design, the power distribution module further includes (M - 3) * M/2 groups of switches. An m3^{th} group of switches in the (M - 3) * M/2 groups of switches is connected between an m3^{th} group of power terminals and an (m3 + i)^{th} group of load terminals, where 1 ≤ m3 ≤ (M - 2), 2 ≤ i ≤ (M - 2), and m3 and i are both integers; or an m4^{th} group of switches in the (M - 3) * M/2 groups of switches is connected between an m4^{th} group of power terminals and an (m4 - j)^{th} group of load terminals, where 3 ≤ m4 ≤ M, 2 ≤ j ≤ (M - 2), and m4 and j are both integers.

In this embodiment of this application, the (M - 3) * M/2 groups of switches added to the power distribution module can simplify paths for some charging modules to supply power to loads.

In addition, because the (M - 3) * M/2 groups of switches are added, the paths for the some charging modules to supply power to the loads are changed, and a maximum current allowed by each group of switches is a rated current of a charging module connected to the group of switches. The maximum current allowed by each group of switches is reduced, to reduce costs. Especially, when rated currents of all charging modules are consistent, the maximum current allowed by each group of switches is a rated current of one charging module, so that specifications of the switches in the power distribution module can be reduced while being normalized.

With reference to the first aspect, in a possible design, the power distribution module further includes P groups of load terminals and P * M groups of switches. P is an integer greater than or equal to 1. The P * M groups of switches each are connected between each group of load terminals in the P groups of load terminals and each group of power terminals in the M groups of power terminals.

In this embodiment of this application, the power distribution apparatus includes M groups of power terminals and (P + M) groups of load terminals. A quantity of load terminals is greater than a quantity of power terminals. When the quantity of load terminals is greater than the quantity of power terminals, a group of switches is designed between each of the P groups of load terminals and each power terminal in the power distribution apparatus, so that a charging module connected to each power terminal can supply power to a load connected to any load terminal in the P groups of load terminals, that is, any charging module can be scheduled to any load. This ensures that the charging flexibility reaches 100%, to meet an actual power requirement of the load. In addition, in this design, when rated currents of all charging modules are consistent, a maximum current allowed by each of a plurality of groups of switches in the power distribution apparatus is a rated current of one charging module, to ensure that specifications of the plurality of groups of switches in the power distribution apparatus are normalized.

With reference to the first aspect, in a possible design, the power distribution module further includes R groups of power terminals and R * M groups of switches. R is an integer greater than or equal to 1. The R * M groups of switches each are connected between each group of power terminals in the R groups of power terminals and each group of power terminals in the M groups of power terminals.

In this embodiment of this application, the power distribution apparatus includes (M + R) groups of power terminals and M groups of load terminals. A quantity of power terminals is greater than a quantity of load terminals. When the quantity of power terminals is greater than the quantity of load terminals, a group of switches is designed between each of the R groups of power terminals and each power terminal in the M groups of power terminals in the power distribution apparatus, so that a charging module connected to each power terminal in the added R groups of power terminals can supply power to a load connected to any load terminal in the P groups of load terminals, that is, any charging module can be scheduled to any load. This ensures that the charging flexibility reaches 100%, to meet an actual power requirement of the load. In addition, in this design, when rated currents of all charging modules are consistent, a maximum current allowed by each of a plurality of groups of switches in the power distribution apparatus is a rated current of one charging module, to ensure that specifications of the plurality of groups of switches in the power distribution apparatus are normalized.

With reference to the first aspect, in a possible design, the power distribution apparatus includes a plurality of power distribution modules. All load terminals of each of the plurality of power distribution modules are connected in a one-to-one correspondence.

In this embodiment of this application, because all load terminals of each of the plurality of power distribution modules in the power distribution apparatus are connected in a one-to-one correspondence, a quantity of power terminals directly connected to any load terminal increases. When a load connected to any load terminal has a charging requirement, and a quantity of charging modules directly connected to the load increases, a power input by the charging modules to the load increases, to improve a speed of supplying power to the load. When a load terminal is connected to an electric vehicle, this design can increase a charging power, accelerate charging, and improve user experience.

According to a second aspect, a charging pile is provided, including a plurality of charging modules, at least one charging connector, and at least one power distribution apparatus. The power distribution apparatus includes at least one power distribution module. The power distribution module includes M groups of power terminals, M groups of load terminals, and (M - 1) groups of switches. Each group of switches includes two switches. One of the two switches is connected between a positive electrode of the power terminal and a positive electrode of the load terminal. The other of the two switches is connected between a negative electrode of the power terminal and a negative electrode of the load terminal. The power terminal is connected to the charging module. The load terminal is connected to the charging connector. The charging connector is configured to connect to a load. M is an integer greater than or equal to 2. The M groups of power terminals are directly connected to the M groups of load terminals in a one-to-one correspondence. An m1^{th} group of switches in the (M - 1) groups of switches is connected between an m1^{th} group of power terminals and an (m1 + 1)^{th} group of load terminals, where 1 ≤ m1 ≤ (M - 1), and m1 is an integer; or an m2^{th} group of switches in the (M - 1) groups of switches is connected between an m2^{th} group of power terminals and an (m2 - 1)^{th} group of load terminals, where 2 ≤ m2 ≤ M, and m2 is an integer.

With reference to the second aspect, in a possible design, the power distribution module further includes a group of switches. The group of switches is connected between a 1^{st} group of power terminals and an M^{th} group of load terminals; or the group of switches is connected between an M^{th} group of power terminals and a 1^{st} group of load terminals.

With reference to the second aspect, in a possible design, the power distribution module further includes (M - 3) * M/2 groups of switches. An m3^{th} group of switches in the (M - 3) * M/2 groups of switches is connected between an m3^{th} group of power terminals and an (m3 + i)^{th} group of load terminals, where 1 ≤ m3 ≤ (M - 2), 2 ≤ i ≤ (M - 2), and m3 and i are both integers; or an m4^{th} group of switches in the (M - 3) * M/2 groups of switches is connected between an m4^{th} group of power terminals and an (m4 - j)^{th} group of load terminals, where 3 ≤ m4 ≤ M, 2 ≤ j ≤ (M - 2), and m4 and j are both integers.

With reference to the second aspect, in a possible design, the power distribution module further includes P groups of load terminals and P * M groups of switches. P is an integer greater than or equal to 1. The P * M groups of switches each are connected between each group of load terminals in the P groups of load terminals and each group of power terminals in the M groups of power terminals.

With reference to the second aspect, in a possible design, the charging pile includes a plurality of power distribution apparatuses. Each of the plurality of power distribution apparatuses includes one power distribution module. P groups of load terminals of the power distribution module in each power distribution apparatus are connected in a one-to-one correspondence. The charging pile further includes a controller. The controller is configured to: when a load connected to at least one group of load terminals in the P groups of load terminals has a charging requirement, control switches connected between the at least one group of load terminals and the power terminal to be turned on, so that all charging modules connected to the plurality of power distribution apparatuses supply power to the load connected to the at least one group of load terminals.

In this embodiment of this application, the P groups of load terminals in each power distribution apparatus that are correspondingly connected may output a sum of rated powers of all charging modules connected to the plurality of power distribution apparatuses. This can increase an output power of the P groups of load terminals. When the P groups of load terminals are connected to an electric vehicle, a charging power can be increased, charging can be accelerated, and user experience can be improved.

With reference to the second aspect, in a possible design, the controller is further configured to: when a load connected to at least one group of load terminals in the M groups of load terminals has a charging requirement, control switches connected between the at least one group of load terminals in the M groups of load terminals and the power terminal to be turned on, so that all charging modules connected to the plurality of power distribution apparatuses supply power to the load connected to the at least one group of load terminals in the M groups of load terminals.

In this embodiment of this application, the M groups of load terminals in each power distribution apparatus may output a sum of rated powers of all charging modules connected to the plurality of power distribution apparatuses. This can increase an output power of the M groups of load terminals. When the M groups of load terminals are connected to an electric vehicle, a charging power can be increased, charging can be accelerated, and user experience can be improved.

With reference to the second aspect, in a possible design, the power distribution apparatus further includes R groups of power terminals and R * M groups of switches. R is an integer greater than or equal to 1. The R * M groups of switches each are connected between each group of power terminals in the R groups of power terminals and each group of power terminals in the M groups of power terminals.

With reference to the second aspect, in a possible design, the charging pile further includes the controller. The controller is configured to: when one of the charging modules supplies power to a connected load through at least one group of switches and a load connected to a load terminal to which the charging module is directly connected has a charging requirement, turn off the at least one group of switches.

In this embodiment of this application, when one of the charging modules supplies power to a connected load through at least one group of switches and a load connected to a load terminal to which the charging module is directly connected has a charging requirement, the at least one group of switches is turned off. When the at least one group of switches is turned off, the charging module supplies power to the load connected to the load terminal to which the charging module is directly connected, to meet a power supply requirement of the load connected to the load terminal to which the charging module is directly connected. In other words, in this embodiment of this application, each charging module preferentially supplies power to a load connected to a load terminal to which the charging module is directly connected.

In addition, in this embodiment of this application, this scheduling manner can also protect life safety of a user and avoid mutual impact due to a fault of a load. This is because when one of the charging modules supplies power to a connected load through at least one group of switches and a load connected to a load terminal to which the charging module is directly connected has a charging requirement, if the controller controls another charging module to supply power to the load connected to the load terminal to which the another charging module is directly connected, the load terminal to which the another charging module is directly connected is energized. When the load terminal to which the another charging module is directly connected is not connected to a load, the user may accidentally touch the load terminal, which endangers the life safety of the user. In addition, in this scheduling manner, the two loads are connected. When one of the loads is faulty, the fault may spread to the other load, resulting in a fault of the other load. This is not allowed in an actual scenario.

With reference to the second aspect, in a possible design, the power distribution apparatus includes a plurality of power distribution modules. All load terminals of each of the plurality of power distribution modules are connected in a one-to-one correspondence.

For technical effects that are not described in detail in the second aspect, refer to descriptions of technical effects that may be achieved by the possible designs in the first aspect. Details are not described herein again.

### BRIEF DESCRIPTION OF DRAWINGS

FIG. 1 is a diagram of a structure of a charging system according to an embodiment of this application;
FIG. 2 is a diagram of a structure of the charging system shown in FIG. 1; and
FIG. 3 to FIG. 26 are diagrams of a power distribution apparatus according to embodiments of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation. In addition, in descriptions of embodiments, unless otherwise specified, "a plurality of" means two or more.

For ease of understanding the solutions of this application, the following first briefly describes technical terms that may be used.

This application may be applied to a system in which a power supply apparatus and a load charge each other through a power distribution matrix. Especially, in a system including a charging pile and an electric vehicle, the charging pile may charge the electric vehicle by using electric energy from a power grid, and the electric vehicle may also reversely output electric energy of the electric vehicle to the power grid.

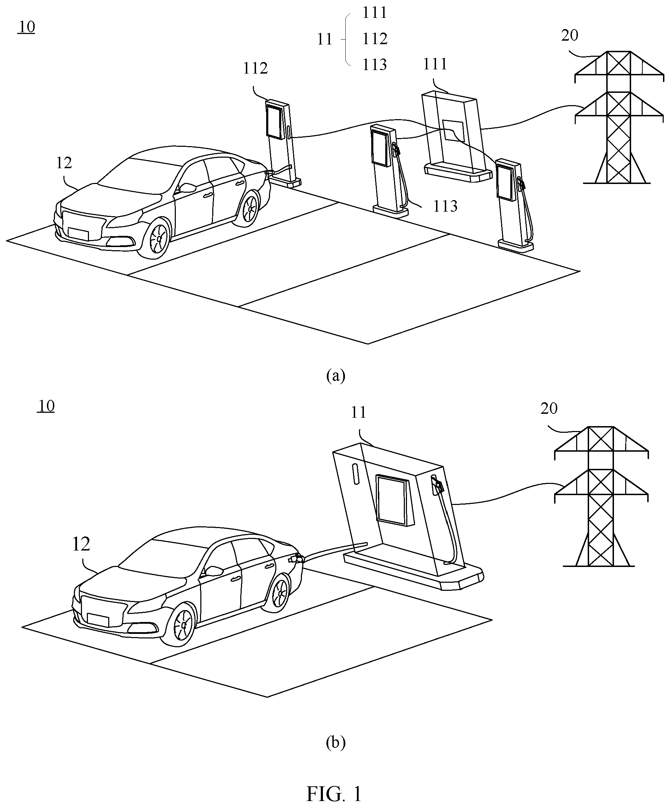

FIG. 1 is a diagram of an example structure of a charging system 10 according to an embodiment of this application.

With reference to (a) in FIG. 1 and (b) in FIG. 1, the charging system 10 may include a charging pile 11 and an electric vehicle 12. The charging pile 11 may be configured to receive an alternating current output by an external power grid 20, convert the alternating current into a stable direct current, and then transmit the stable direct current to the electric vehicle 12, to charge the electric vehicle 12. Alternatively, the electric vehicle 12 may reversely output electric energy to the external power grid 20.

In some embodiments, as shown in (a) in FIG. 1, the charging pile 11 may include a charging apparatus 111, at least one charging terminal 112, and at least one charging connector 113. The charging apparatus 111 may be electrically connected to the at least one charging terminal 112. The at least one charging terminal 112 may be electrically connected to the at least one charging connector 113. During specific implementation, one charging terminal 112 may be electrically connected to one or more charging connectors 113.

The charging apparatus 111 may include a plurality of power conversion apparatuses. The plurality of power conversion apparatuses may convert an alternating current from the external power grid 20 into a stable direct current, and then transmit the stable direct current to the charging terminal 112. The plurality of power conversion apparatuses may include, for example, an alternating current-direct current (alternating current-direct current, AC-DC) conversion apparatus and a direct current-direct current (direct current-direct current, DC-DC) conversion apparatus. The charging terminal 112 transmits the stable direct current to the electric vehicle 12 through the charging connector 113, to charge the electric vehicle 12.

The charging terminal 112 may include a housing, a human-machine interaction interface, a charging control unit, a metering and billing unit, and the like, and is configured to perform information exchange, energy transmission, metering and billing, and the like with the electric vehicle 12.

The electric vehicle 12 may be a vehicle driven by electric energy. The electric vehicle 12 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, in the charging pile 11, a human-machine interaction interface, a charging control unit, a metering and billing unit, and the like may be directly disposed in a charging apparatus 111. Therefore, the charging pile 11 may include only the charging apparatus 111 and at least one charging connector 113 electrically connected to the charging apparatus 111, and does not include a charging terminal 112. A plurality of power conversion apparatuses in the charging apparatus 111 may convert an alternating current from the external power grid 20 into a stable direct current, and then directly transmit the stable direct current to the electric vehicle 12 through the charging connector 113.

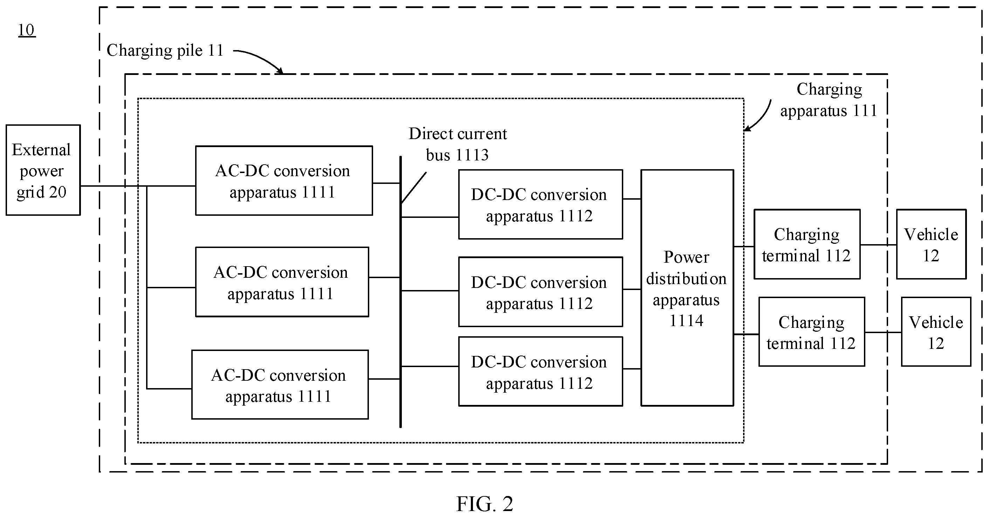

FIG. 2 is a diagram of a structure of the charging system 10 shown in FIG. 1. The charging apparatus 111 may include a plurality of AC-DC conversion apparatuses 1111, DC-DC conversion apparatuses 1112, a direct current bus 1113, and a power distribution apparatus 1114.

Input ends of the plurality of AC-DC conversion apparatuses 1111 may be connected to the external power grid 20, and output ends of the plurality of AC-DC conversion apparatuses 1111 may be connected to the direct current bus 1113. In other words, the plurality of AC-DC conversion apparatuses 1111 may be connected in parallel between the external power grid 20 and the direct current bus 1113. The plurality of AC-DC conversion apparatuses 1111 may be configured to receive an alternating current from the external power grid 20, convert the alternating current into direct currents, and output the direct currents through the direct current bus 1113.

Input ends of the DC-DC conversion apparatuses 1112 may be connected to the direct current bus 1113, and output ends of the DC-DC conversion apparatuses 1112 may be connected to charging terminals 112 through the power distribution apparatus 1114. The DC-DC conversion apparatuses 1112 may receive, through the direct current bus 1113, the direct currents output by the plurality of AC-DC conversion apparatuses 1111, further convert the direct currents into direct currents applicable to vehicles 12, and then transmit the direct currents to the power distribution apparatus 1114. The power distribution apparatus 1114 may dynamically distribute, based on charging powers actually required by the vehicles, the direct currents output by the plurality of DC-DC conversion apparatuses 1112. Distributed charging powers are transmitted to the vehicles 12 through the charging terminals 112, to charge the vehicles 12.

As described above, the power distribution apparatus 1114 may dynamically distribute, based on the charging powers actually required by the vehicles, the direct currents output by the plurality of DC-DC conversion apparatuses 1112. At present, most power distribution apparatuses use a full-matrix power distribution architecture. That is, a switching device is disposed at each power routing node to perform power distribution. For example, FIG. 3 shows that a power distribution apparatus is connected to four charging modules and four loads. The power distribution apparatus needs to be provided with 16 groups of switches. Each charging module is connected to each load through one group of switches K1 to K4. A controller controls the switches K1 to K4 to be turned on or turned off, to control whether the power distribution apparatus outputs power to the load. However, there are a large quantity of switches in the full-matrix architecture, resulting in a large size and high costs of the power distribution architecture.

In view of this, this application provides a power distribution apparatus. A quantity of switches in the power distribution apparatus is reduced, so that a size and costs of the power distribution apparatus can be reduced. In addition, even if the quantity of switches in the power distribution apparatus is reduced, each charging module connected to the power distribution apparatus can still supply power to each load connected to the power distribution apparatus, that is, any charging module can be scheduled to any load. This ensures that charging flexibility reaches 100%, to meet actual power requirements of different loads.

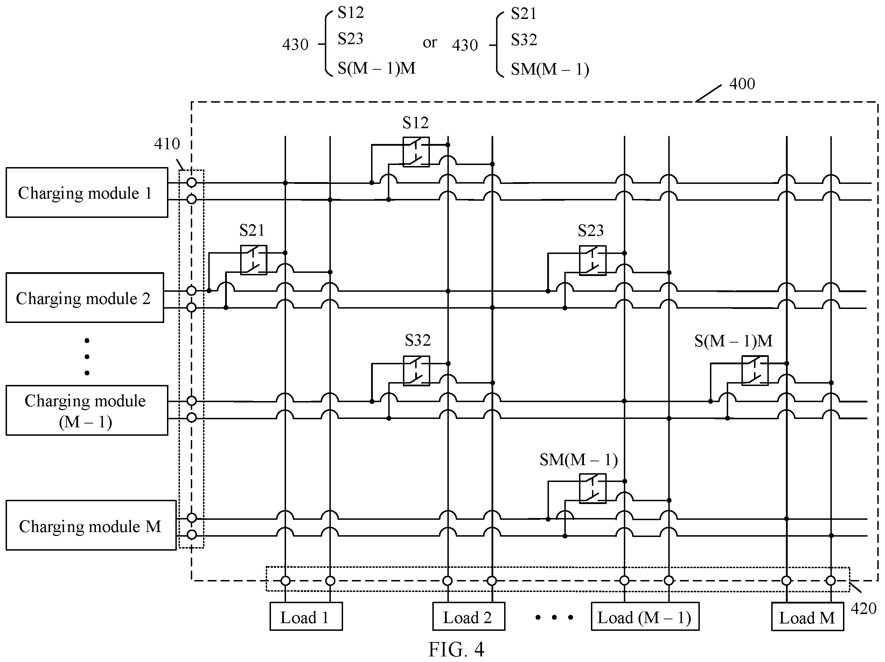

In an embodiment, as shown in FIG. 4, the power distribution apparatus includes at least one power distribution module 400. The power distribution module 400 includes M groups of power terminals 410, M groups of load terminals 420, and (M - 1) groups of switches 430. Each group of switches includes two switches. One of the two switches is connected between a positive electrode of the power terminal and a positive electrode of the load terminal. The other of the two switches is connected between a negative electrode of the power terminal and a negative electrode of the load terminal. The power terminal is configured to connect to a charging module. The load terminal is configured to connect to a load. M is an integer greater than or equal to 2.

The M groups of power terminals are directly connected to the M groups of load terminals in a one-to-one correspondence. An m1^{th} group of switches in the (M - 1) groups of switches is connected between an m1^{th} group of power terminals and an (m1 + 1)^{th} group of load terminals, where 1 ≤ m1 ≤ (M - 1), and m1 is an integer; or an m2^{th} group of switches in the (M - 1) groups of switches is connected between an m2^{th} group of power terminals and an (m2 - 1)^{th} group of load terminals, where 2 ≤ m2 ≤ M, and m2 is an integer.

In this embodiment of this application, that the M groups of power terminals are directly connected to the M groups of load terminals in a one-to-one correspondence may be understood as that there are no switches between each group of power terminals in the M groups of power terminals and a corresponding load terminal in the M groups of load terminals. In this embodiment of this application, each group of power terminals in the M groups of power terminals is designed to be connected to the other load terminals through switches.

The following uses an example in which the power distribution module includes four groups of power terminals and four groups of load terminals. When the power distribution module includes four groups of power terminals and four groups of load terminals, the power distribution module includes three groups of switches. The three groups of switches may be connected to different power terminals and load terminals. For details, refer to the following content.

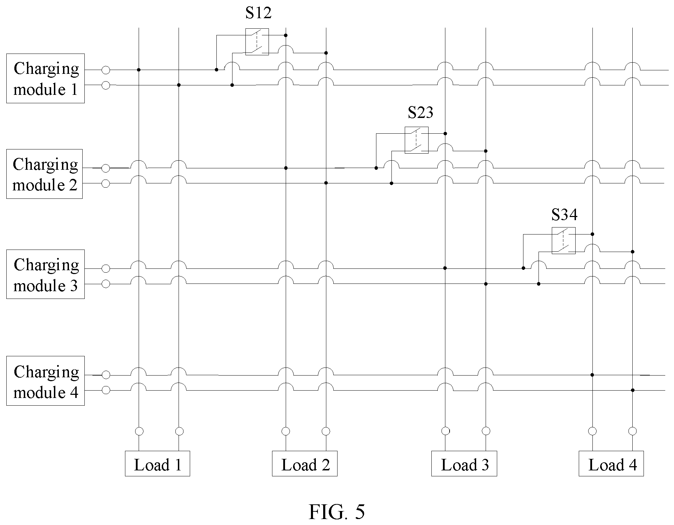

In an implementation, the three groups of switches are connected between an m^{th} group of power terminals and an (m + 1)^{th} group of load terminals, where 1 ≤ m ≤ 3. Based on this implementation, a 1^{st} group of switches S12 is connected between a 1^{st} group of power terminals and a 2^{nd} group of load terminals, a 2^{nd} group of switches S23 is connected between a 2^{nd} group of power terminals and a 3^{rd} group of load terminals, and a 3^{rd} group of switches S34 is connected between a 3^{rd} group of power terminals and a 4^{th} group of load terminals, as shown in FIG. 5.

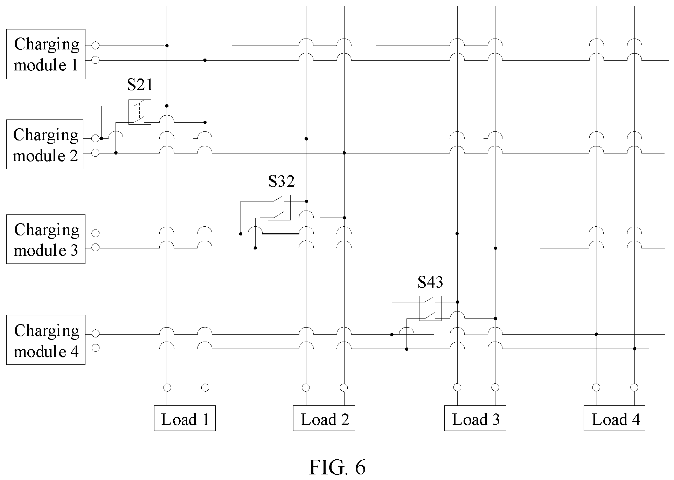

In another implementation, the three groups of switches are connected between an n^{th} group of power terminals and an (n - 1)^{th} group of load terminals, where 2 ≤ n ≤ 4. Based on this implementation, a 1^{st} group of switches S21 is connected between a 2^{nd} group of power terminals and a 1^{st} group of load terminals, a 2^{nd} group of switches S32 is connected between a 3^{rd} group of power terminals and a 2^{nd} group of load terminals, and a 3^{rd} group of switches S43 is connected between a 4^{th} group of power terminals and a 3^{rd} group of load terminals, as shown in FIG. 6.

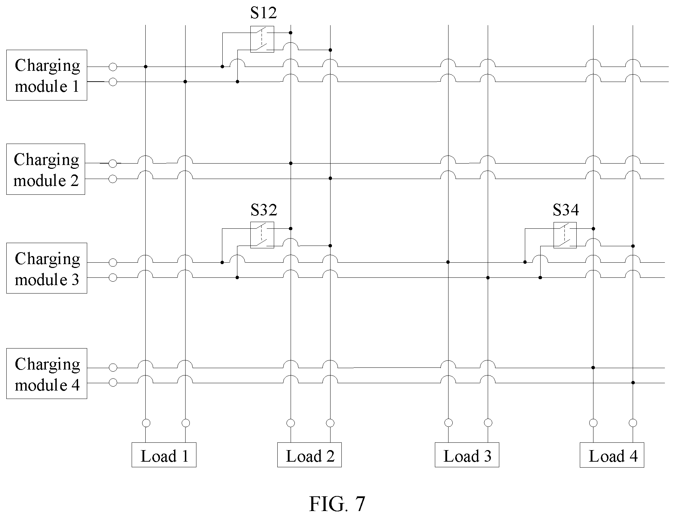

It should be understood that power terminals and load terminals specifically connected to the three groups of switches are not limited to the foregoing two implementations. This application can be applied provided that any charging module connected to the power distribution apparatus can supply power to any load. For example, in still another implementation, in the three groups of switches, a 1^{st} group of switches S12 is connected between a 1^{st} group of power terminals and a 2^{nd} group of load terminals, a 2^{nd} group of switches is connected between a 3^{rd} group of power terminals and the 2^{nd} group of load terminals, and a 3^{rd} group of switches is connected between the 3^{rd} group of power terminals and a 4^{th} group of load terminals, as shown in FIG. 7.

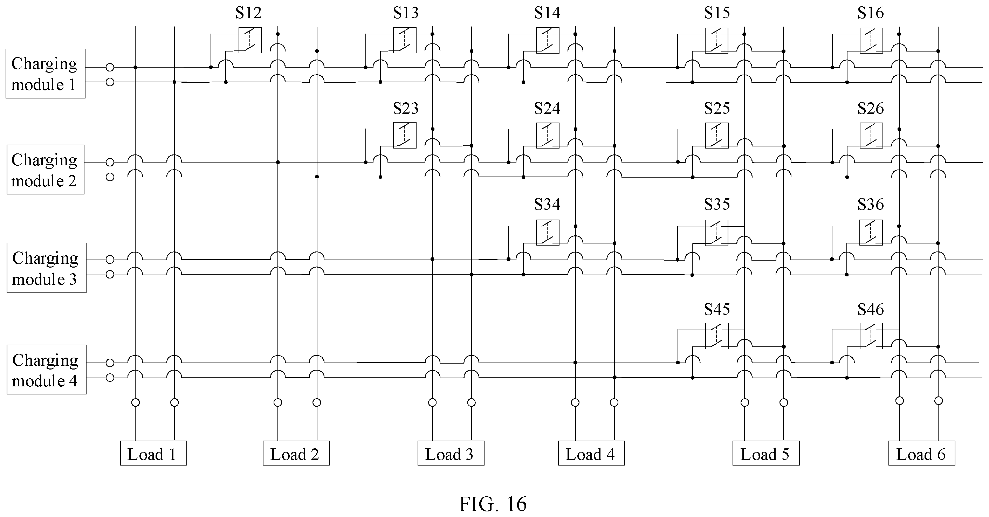

With reference to FIG. 5 to FIG. 7, it can be learned that when a quantity of power terminals and a quantity of load terminals are both 4, only three groups of switches need to be disposed in the power distribution module. However, in a solution shown in FIG. 3, 16 groups of switches need to be disposed in the power distribution apparatus, which is significantly greater than the quantity of switches in this embodiment of this application. Therefore, in comparison with the solution shown in FIG. 3, in this embodiment of this application, the quantity of switches is greatly reduced, to further reduce the size and costs of the power distribution apparatus, a switching loss, and interfaces of a monitoring and control system, offering distinct advantages.

The following uses the power distribution apparatus shown in FIG. 5 as an example to describe a path for a charging module to supply power to a load in different cases.

### Case 1:

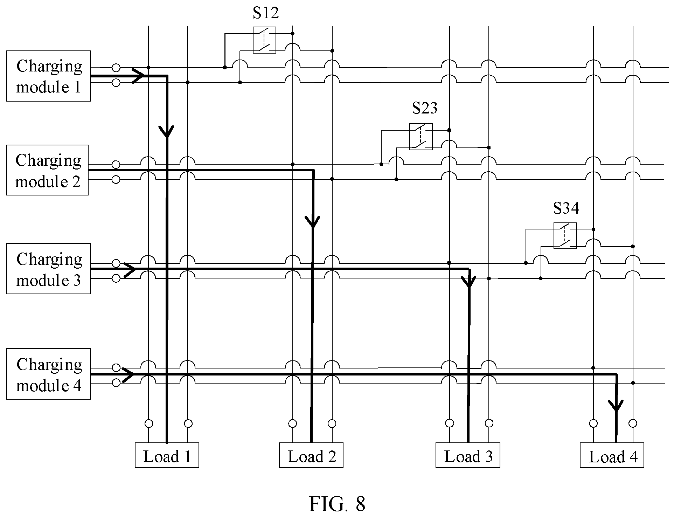

When each charging module supplies power to a directly connected load, for specific power paths, refer to FIG. 8. As shown in FIG. 8, a charging module 1 directly supplies power to a load 1, a charging module 2 directly supplies power to a load 2, a charging module 3 directly supplies power to a load 3, and a charging module 4 directly supplies power to a load 4. In this case, each charging module can supply power to the directly connected load without turning on any switches in the power distribution apparatus.

### Case 2:

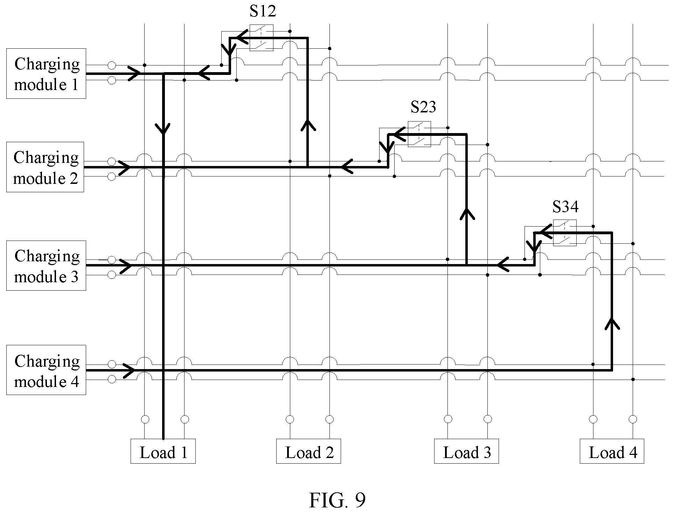

When all charging modules supply power to a load 1, for specific power paths, refer to FIG. 9. For a charging module 1, a power terminal connected to the charging module 1 is directly connected to a load terminal connected to the load 1, so that the charging module 1 can directly supply power to the load 1. For a charging module 2, a power terminal connected to the charging module 2 may be connected, through the switches S12, to the load terminal connected to the load 1, so that the charging module 2 can supply power to the load 1 through the switches S12 when the switches S12 are turned on. For a charging module 3, a power terminal connected to the charging module 3 may be connected, through the switches S23 and the switches S12, to the load terminal connected to the load 1, so that the charging module 3 can supply power to the load 1 through the switches S23 and the switches S12 when the switches S23 and the switches S12 are turned on. For a charging module 4, a power terminal connected to the charging module 4 may be connected, through the switches S34, the switches S23, and the switches S12, to the load terminal connected to the load 1, so that the charging module 4 can supply power to the load 1 through the switches S34, the switches S23, and the switches S12 when the switches S34, the switches S23, and the switches S12 are turned on. That all charging modules connected to the power distribution apparatus supply power to a load 2, a load 3, and a load 4 is similar to that all charging modules supply power to the load 1. Details are not described.

### Case 3:

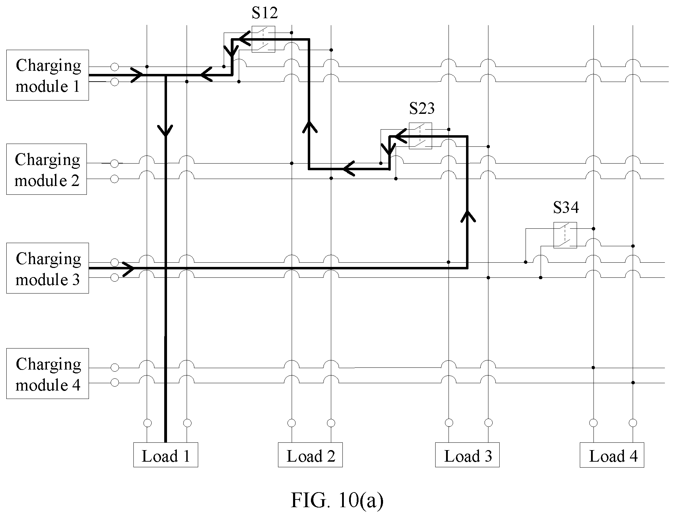

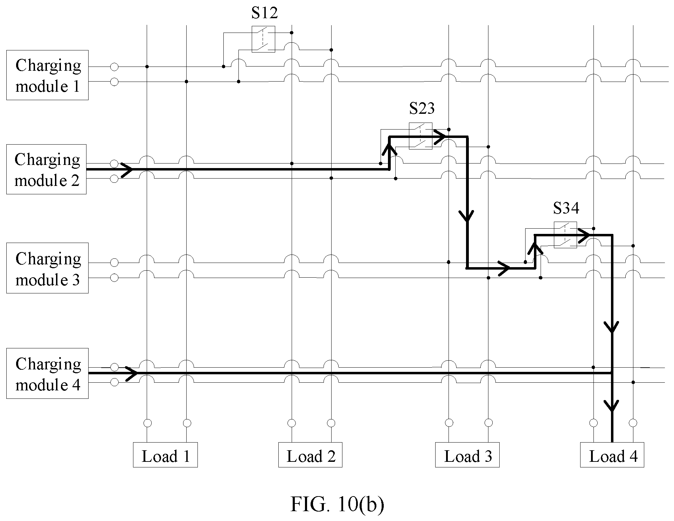

When a charging module 1 and a charging module 3 supply power to a load 1 and a charging module 2 and a charging module 4 supply power to a load 4, for specific power paths, refer to FIG. 10(a). For the charging module 1, the charging module 1 can directly supply power to the load 1; and for the charging module 3, the charging module 3 can supply power to the load 1 through the switches S23 and the switches S12 when the switches S23 and the switches S12 are turned on, as shown in FIG. 10(a). For the charging module 2, a power terminal connected to the charging module 2 may be connected, through the switches S23 and the switches S34, to a load terminal connected to the load 4, so that the charging module 2 can supply power to the load 4 through the switches S23 and the switches S34 when the switches S23 and the switches S34 are turned on; and for the charging module 4, a power terminal connected to the charging module 4 is directly connected to the load terminal connected to the load 4, so that the charging module 4 can directly supply power to the load 4, as shown in FIG. 10(b).

It should be understood that there are many cases in which different charging modules supply power to different loads. For brevity, details are not described herein.

With reference to FIG. 8 to FIG. 10(b), even if the quantity of switches in the power distribution apparatus is reduced, each charging module connected to the power distribution apparatus can still supply power to each load connected to the power distribution apparatus, that is, any charging module can be scheduled to any load, to meet charging power requirements of different loads. In addition, in comparison with the power distribution apparatus shown in FIG. 3, in this embodiment of this application, a quantity of switches that are turned on is reduced in a same charging scenario. For example, if the charging module 1 and the charging module 2 need to supply power to the load 1, two groups of switches K1 need to be turned on for the power distribution apparatus shown in FIG. 3, but only one group of switches S12 needs to be turned on in this embodiment of this application. Therefore, in comparison with the power distribution apparatus shown in FIG. 3, in this embodiment of this application, the quantity of switches that need to be turned on is reduced, that is, a quantity of switching times for switch scheduling is reduced, and switch control is simpler.

In this embodiment of this application, when the power distribution module includes M groups of power terminals and M groups of load terminals, the power distribution module designed in this application needs to include only (M - 1) groups of switches, to reduce the quantity of switches in the power distribution apparatus, so that the size and costs of the power distribution apparatus can be reduced. Even if the quantity of switches in the power distribution apparatus is reduced, because the M groups of power terminals are directly connected to the M groups of load terminals in a one-to-one correspondence, and the (M - 1) groups of switches each are connected between the m1^{th} group of power terminals and the (m1 + 1)^{th} group of load terminals or between the m2^{th} group of power terminals and the (m2 - 1)^{th} group of load terminals, each charging module connected to the power distribution apparatus can still supply power to each load connected to the power distribution apparatus, that is, any charging module can be scheduled to any load. This ensures that the charging flexibility reaches 100%, to meet the actual power requirements of different loads.

In addition, in this embodiment of this application, a maximum current allowed by each group of switches is a sum of rated currents of some of the charging modules connected to the power distribution module. For example, with reference to FIG. 9, when all charging modules supply power to the load 1, a direct current output by the charging module 1 can power the load 1 without passing through any switches. However, for the charging module 2, the charging module 3, and the charging module 4, there is a need to pass through the switches S12 to power the load 1. Therefore, a maximum current allowed by the switches S12 is a sum of rated direct currents output by the charging module 2, the charging module 3, and the charging module 4.

When all charging modules supply power to the load 2, a direct current output by the charging module 2 can power the load 2 without passing through any switches. However, for the charging module 1, the charging module 3, and the charging module 4, there is a need to pass through switches to power the load 2. Specifically, the charging module 1 supplies power to the load 2 through the switches S12, the charging module 3 supplies power to the load 2 through the switches S23, and the charging module 4 supplies power to the load 2 through the switches S34 and the switches S23. For the charging module 3 and the charging module 4, there is a need to pass through the switches S23 to power the load 2. Although the switches S23 collect only direct currents output by the charging module 3 and the charging module 4, a maximum current allowed by the switches S23 is still designed to be a sum of rated currents of the charging module 1, the charging module 3, and the charging module 4.

Similarly, a maximum current allowed by the switches S34 is a sum of rated direct currents output by the charging module 1, the charging module 2, and the charging module 3.

In summary, in this embodiment of this application, a maximum current allowed by switches is a sum of rated currents of some of the charging modules connected to the power distribution module. Especially, when rated direct currents output by all charging modules are consistent, the maximum current allowed by each group of switches is a sum of rated currents of (M - 1) charging modules, so that specifications of the switches in the power distribution module can be normalized, to facilitate switch selection.

As noted above, with reference to FIG. 5, the charging module 4 can supply power to the load 1 through the switches S34, S23, and S12 when the switches S34, S23, and S12 are turned on. However, although the charging module 4 can supply power to the load 1 through the switches S34, S23, and S12, a path for the charging module 4 to supply power to the load 1 through the switches S34, S23, and S12 is complex, and a plurality of groups of switches need to be turned on. Especially, if a quantity of charging modules and a quantity of loads reach a dozen or even dozens, more switches need to be turned on and a path is more complex when the charging module 1 supplies power to another load.

In an embodiment, the power distribution module further includes a group of switches. The group of switches is connected between a 1^{st} group of power terminals and an M^{th} group of load terminals; or the group of switches is connected between an M^{th} group of power terminals and a 1^{st} group of load terminals.

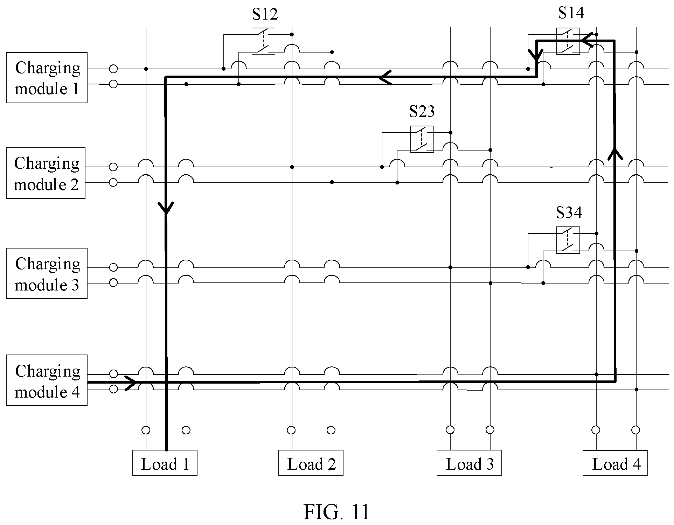

In this embodiment of this application, an example in which the power distribution module includes four power terminals and four groups of load terminals is still used. In an implementation, a group of switches S14 disposed in the power distribution module is connected between the 1^{st} power terminal and the 4^{th} group of load terminals, as shown in FIG. 11. Based on this design, the charging module 4 can supply power to the load 1 through the switches S14 when the switches S14 are turned on. In comparison with that the charging module 4 supplies power to the load 1 through the power distribution module shown in FIG. 5, in this embodiment of this application, the charging module 4 can supply power to the load 1 by turning on only one group of switches. This reduces the quantity of switches that are turned on, to simplify a power supply path. In addition, the charging module 1 can supply power to the load 4 through the switches S14 when the switches S14 are turned on. In comparison with that the charging module 1 supplies power to the load 4 through the power distribution module shown in FIG. 5, in this embodiment of this application, the quantity of switches that are turned on can also be reduced, to simplify a power supply path.

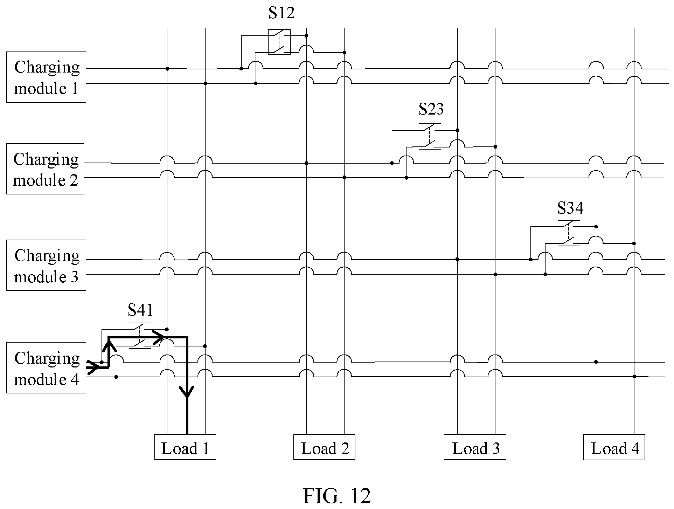

In another implementation, a group of switches S41 disposed in the power distribution module is connected between the 4^{th} power terminal and the 1^{st} group of load terminals, as shown in FIG. 12. Based on this design, the charging module 4 can supply power to the load 1 through the switches S41 when the switches S41 are turned on. In comparison with that the charging module 4 supplies power to the load 1 through the power distribution module shown in FIG. 5, in this embodiment of this application, the charging module 4 can supply power to the load 1 by turning on only one group of switches. This reduces the quantity of switches that are turned on, to simplify a power supply path. In addition, the charging module 1 can supply power to the load 4 through the switches S41 when the switches S41 are turned on. In comparison with that the charging module 4 supplies power to the load 1 through the power distribution module shown in FIG. 5, in this embodiment of this application, the quantity of switches that are turned on can also be reduced, to simplify a power supply path.

When there are a large quantity of power terminals and a large quantity of load terminals in the power distribution apparatus, in this embodiment of this application, designing the group of switches can significantly simplify a power supply path. For example, it is assumed that the power distribution apparatus includes 18 groups of power terminals and 18 groups of load terminals. Based on a design shown in FIG. 4, the power distribution apparatus needs to include 17 groups of switches. When a charging module 18 supplies power to a load 1, the 17 groups of switches need to be turned on, and a direct current output by the charging module 18 can be transmitted to the load 1 only after passing through the 17 groups of switches, to supply power to the load 1. Based on a design shown in FIG. 11 or FIG. 12, the power distribution apparatus includes 18 groups of switches. When a charging module 18 supplies power to a load 1, only switches connected to an 18^{th} group of power terminals and a 1^{st} group of load terminals need to be turned on, so that a direct current output by the charging module 18 can be transmitted to the load 1 through only this group of switches, to supply power to the load 1.

In this embodiment of this application, the group of switches included in the power distribution module is connected between the 1^{st} group of power terminals and the M^{th} group of load terminals or between the M^{th} group of power terminals and the 1^{st} group of load terminals. When a charging module connected to the 1^{st} group of power terminals supplies power to a load connected to the M^{th} group of load terminals, or when a charging module connected to the M^{th} group of power terminals supplies power to a load connected to the 1^{st} group of load terminals, the quantity of switches that are turned on can be reduced, to simplify a power supply path. Especially, when there are a large quantity of power terminals and a large quantity of load terminals, advantages of the group of switches added in this embodiment of this application are more distinct.

In an embodiment, the power distribution module further includes (M - 3) * M/2 groups of switches.

An m3^{th} group of switches in the (M - 3) * M/2 groups of switches is connected between an m3^{th} group of power terminals and an (m3 + i)^{th} group of load terminals, where 1 ≤ m3 ≤ (M - 2), 2 ≤ i ≤ (M - 2), and m3 and i are both integers.

Alternatively, an m4^{th} group of switches in the (M - 3) * M/2 groups of switches is connected between an m4^{th} group of power terminals and an (m4 - j)^{th} group of load terminals, where 3 ≤ m4 ≤ M, 2 ≤ j ≤ (M - 2), and m4 and j are both integers.

In this embodiment of this application, the power distribution module further includes the (M - 3) * M/2 groups of switches. The (M - 3) * M/2 groups of switches may be connected to different power terminals and load terminals.

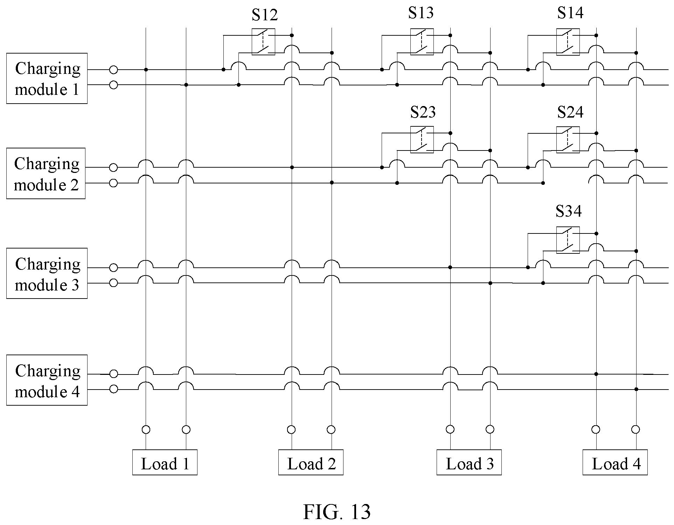

In an implementation, the m3^{th} group of switches in the (M - 3) * M/2 groups of switches is connected between the m3^{th} group of power terminals and the (m3 + i)^{th} group of load terminals. An example in which the power distribution module includes four groups of power terminals and four groups of load terminals is used. The power distribution module further includes two groups of switches. In the two groups of switches, a 1^{st} group of switches S13 is connected between a 1^{st} group of power terminals and a 3^{rd} group of load terminals, and a 2^{nd} group of switches S24 is connected between a 2^{nd} power terminal and a 4^{th} group of load terminals, as shown in FIG. 13.

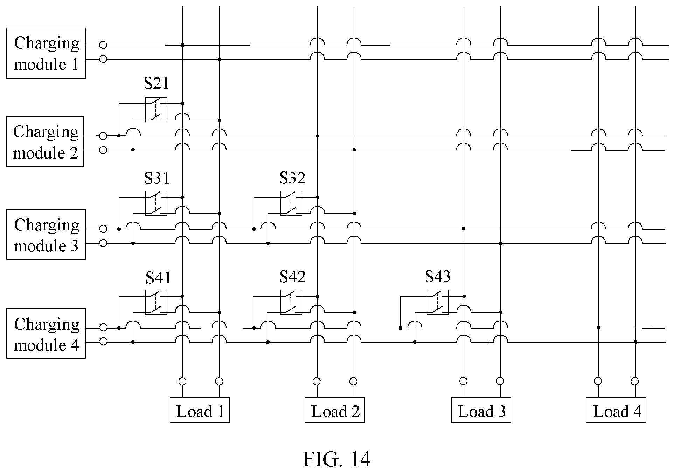

In another implementation, the m4^{th} group of switches in the (M - 3) * M/2 groups of switches is connected between the m4^{th} group of power terminals and the (m4 - j)^{th} group of load terminals. An example in which the power distribution module includes four groups of power terminals and four groups of load terminals is still used. The power distribution module further includes two groups of switches. In the two groups of switches, a 1^{st} group of switches S31 is connected between a 3^{rd} group of power terminals and a 1^{st} group of load terminals, and a 2^{nd} group of switches S42 is connected between a 4^{th} group of power terminals and a 2^{nd} group of load terminals, as shown in FIG. 14.

It should be understood that FIG. 13 and FIG. 14 show only two possible implementations. The added (M - 3) * M/2 groups of switches may alternatively be connected to different power terminals and load terminals. For example, in still another implementation, the power distribution module further includes two groups of switches. In the two groups of switches, a 1^{st} group of switches S13 is connected between a 1^{st} group of power terminals and a 3^{rd} group of load terminals, and a 2^{nd} group of switches S42 is connected between a 4^{th} group of power terminals and a 2^{nd} group of load terminals.

The following describes power paths for different charging modules to supply power to different loads.

The power distribution apparatus shown in FIG. 13 is used as an example. When all charging modules supply power to a load 1, for a charging module 1, similar to that in FIG. 9, the charging module 1 can directly supply power to the load 1. For a charging module 2, also similar to that in FIG. 9, the charging module 2 can supply power to the load 1 through switches S12 when the switches S12 are turned on.

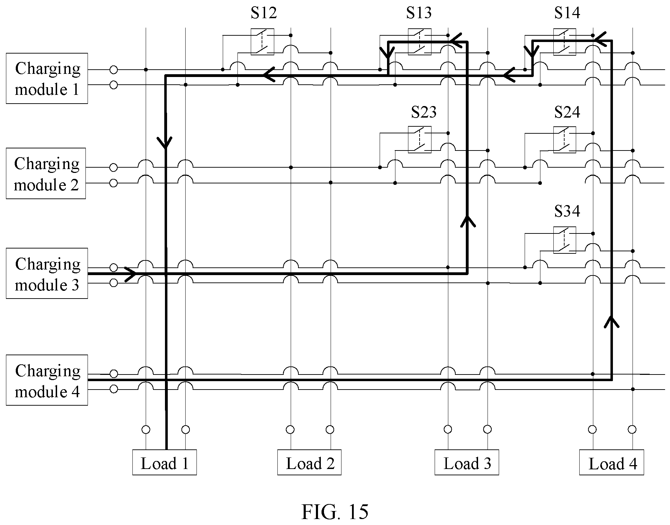

For a charging module 3, a power terminal connected to the charging module 3 may be connected, through the switches S13, to a load terminal connected to the load 1, so that the charging module 3 can supply power to the load 1 through the switches S13 when the switches S13 are turned on, as shown in FIG. 15. In comparison with a power path for the charging module 3 to supply power to the load 1 shown in FIG. 9, in this embodiment of this application, the charging module 3 can supply power to the load 1 by turning on only one group of switches, to simplify a power supply path.

For a charging module 4, a power terminal connected to the charging module 4 may be connected, through the switches S14, to the load terminal connected to the load 1, so that the charging module 4 can supply power to the load 1 through the switches S14 when the switches S14 are turned on, as shown in FIG. 15. In comparison with a power path for the charging module 4 to supply power to the load 1 shown in FIG. 9, in this embodiment of this application, the charging module 4 can supply power to the load 1 by turning on only one group of switches, to simplify a power supply path.

In addition, in this embodiment of this application, because each group of switches is connected to different power terminals and load terminals, when different charging modules supply power to a same load, each charging module supplies power to the same load through different switches. For example, all charging modules supply power to the load 1. The charging module 2 supplies power to the load 1 through the switches S12, the charging module 3 supplies power to the load 1 through the switches S13, and the charging module 4 supplies power to the load 1 through the switches S14. Therefore, a maximum current allowed by each group of switches is a rated current of one charging module.

In this embodiment of this application, maximum currents allowed by the switches S12, S13, and S14 are a rated current of the charging module 1, maximum currents allowed by the switches S23 and S24 are a rated current of the charging module 2, and a maximum current allowed by the switches S34 is a rated current of the charging module 3. In the embodiment shown in FIG. 9, the maximum current allowed by the switches S12 is the sum of the rated currents of the charging module 2, the charging module 3, and the charging module 4, the maximum current allowed by the switches S23 is a sum of the rated currents of the charging module 3 and the charging module 4, or the charging module 1 and the charging module 2, and the maximum current allowed by the switches S34 is a sum of the rated currents of the charging module 1, the charging module 2, and the charging module 3.

In other words, in the embodiment shown in FIG. 5, the maximum current allowed by each group of switches is a sum of rated currents of a plurality of charging modules. In this embodiment of this application, the maximum current allowed by each group of switches is a rated current of a charging module connected to the group of switches. Therefore, the maximum current allowed by each group of switches is reduced, to reduce costs. Especially, when rated currents of all charging modules are consistent, the maximum current allowed by each group of switches is a rated current of one charging module, so that specifications of the switches in the power distribution module can be reduced while being normalized.

The foregoing describes a power path for each charging module to supply power to each load when the quantity of power terminals is consistent with the quantity of load terminals. In some possible cases, the quantity of power terminals is inconsistent with the quantity of load terminals. The following describes a setting of switches in the power distribution apparatus and a power path for a charging module to supply power to a load when the quantity of power terminals is inconsistent with the quantity of load terminals.

Case 1: The quantity of load terminals is greater than the quantity of power terminals.

In an embodiment, the power distribution module further includes P groups of load terminals and P * M groups of switches. P is an integer greater than or equal to 1. The P * M groups of switches each are connected between each group of load terminals in the P groups of load terminals and each group of power terminals in the M groups of power terminals.

In this embodiment of this application, the power distribution apparatus includes M groups of power terminals and (P + M) groups of load terminals. The quantity of load terminals is greater than the quantity of power terminals. When the quantity of load terminals is greater than the quantity of power terminals, a group of switches is designed between each of the P groups of load terminals and each group of power terminals in the power distribution apparatus, so that a charging module connected to each group of power terminals can supply power to a load connected to any load terminal in the P groups of load terminals, to meet an actual power requirement of the load.

In FIG. 16, an example in which there are four power terminals and six load terminals is used. For specific paths for each charging module to supply power to loads 1 to 4, refer to FIG. 13. Details are not described again.

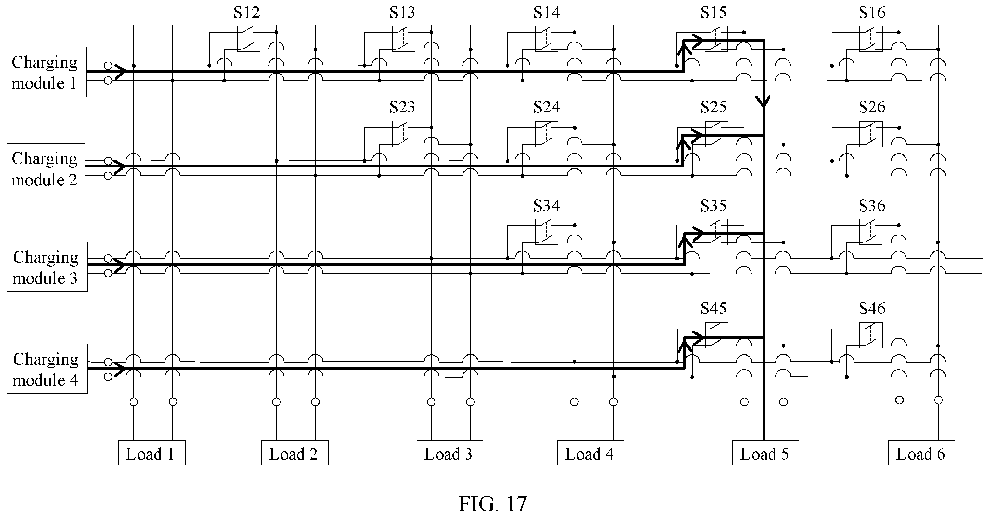

This application mainly describes a case in which each charging module supplies power to a load 5 and a load 6. Specifically, for example, each charging module supplies power to the load 5. For a charging module 1, a power terminal connected to the charging module 1 is connected, through switches S15, to a load terminal connected to the load 5, so that the charging module 1 can supply power to the load 5 through the switches S15 when the switches S15 are turned on. Similarly, a charging module 2 supplies power to the load 5 through switches S25, a charging module 3 supplies power to the load 5 through switches S35, and a charging module 4 supplies power to the load 5 through switches S45. Specific power paths are shown in FIG. 17.

For example, each charging module supplies power to the load 6. The charging module 1 supplies power to the load 6 through switches S16, the charging module 2 supplies power to the load 6 through switches S26, the charging module 3 supplies power to the load 6 through switches S36, and the charging module 4 supplies power to the load 6 through switches S46. Specific power paths are not shown in the figure.

It may be understood that based on a switch connection manner shown in FIG. 16, maximum currents allowed by the switches S12, S13, S14, S15, and S16 are a rated current of the charging module 1, maximum currents allowed by the switches S23, S24, S25, and S26 are a rated current of the charging module 2, maximum currents allowed by the switches S34, S35, and S36 are a rated current of the charging module 3, and maximum currents allowed by the switches S45 and S46 are a rated current of the charging module 4. In other words, in this embodiment of this application, a maximum current allowed by each group of switches is a rated current of a charging module connected to the group of switches. Especially, when rated currents of all charging modules are consistent, a maximum current allowed by each of a plurality of groups of switches in the power distribution apparatus is a rated current of one charging module, to ensure that specifications of the plurality of groups of switches in the power distribution apparatus are normalized.

It should be noted that in some possible implementations, not all load terminals in the P groups of load terminals are connected to each group of power terminals through switches, and a charging module connected to each group of power terminals can also supply power to a load connected to each group of load terminals in the P groups of load terminals.

For example, it is assumed that only the switches S15 and S16 are added to the power distribution module. For the charging module 1, the charging module 1 can supply power to the load 5 through the switches S15. For the charging module 2, the charging module 2 can supply power to the load 5 through the switches S24, S14, and S15. For the charging module 3, the charging module 3 can supply power to the load 5 through the switches S34, S14, and S15. For the charging module 4, the charging module 4 can supply power to the load 5 through the switches S14 and S15.

It should be further noted that in this embodiment of this application, because the quantity of power terminals is less than the quantity of load terminals, it is highly likely that a requirement of charging upon vehicle arrival cannot be met. Therefore, during actual application, a solution of round-robin charging or parallel connection of a plurality of power distribution modules may be used.

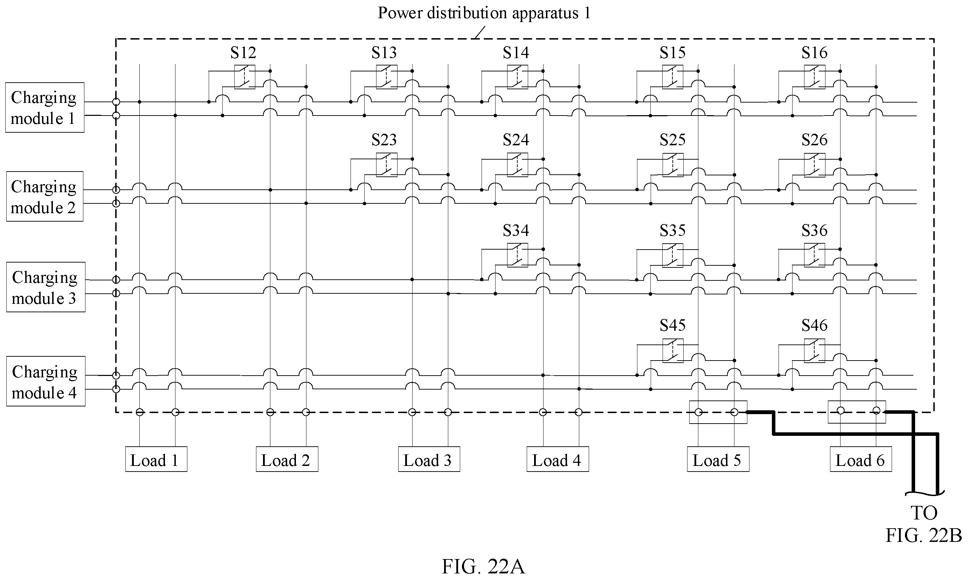

For example, for the solution of round-robin charging, different switches are controlled to be turned on, so that a same charging module can output power through different load terminals, to maximally meet the requirement of charging upon vehicle arrival. For the solution of parallel connection of a plurality of power distribution modules, refer to the following content about FIG. 22A to FIG. 26.

Case 2: The quantity of power terminals is greater than the quantity of load terminals.

In an embodiment, the power distribution module further includes R groups of power terminals and R * M groups of switches. R is an integer greater than or equal to 1. The R * M groups of switches each are connected between each group of power terminals in the R groups of power terminals and each group of power terminals in the M groups of power terminals.

In this embodiment of this application, the power distribution apparatus includes (M + R) groups of power terminals and M groups of load terminals. The quantity of power terminals is greater than the quantity of load terminals. When the quantity of power terminals is greater than the quantity of load terminals, a group of switches is designed between each of the R groups of power terminals and each group of power terminals in the M groups of power terminals in the power distribution apparatus, so that a charging module connected to each group of power terminals in the added R groups of power terminals can supply power to a load connected to any load terminal in the P groups of load terminals, to meet an actual power requirement of the load.

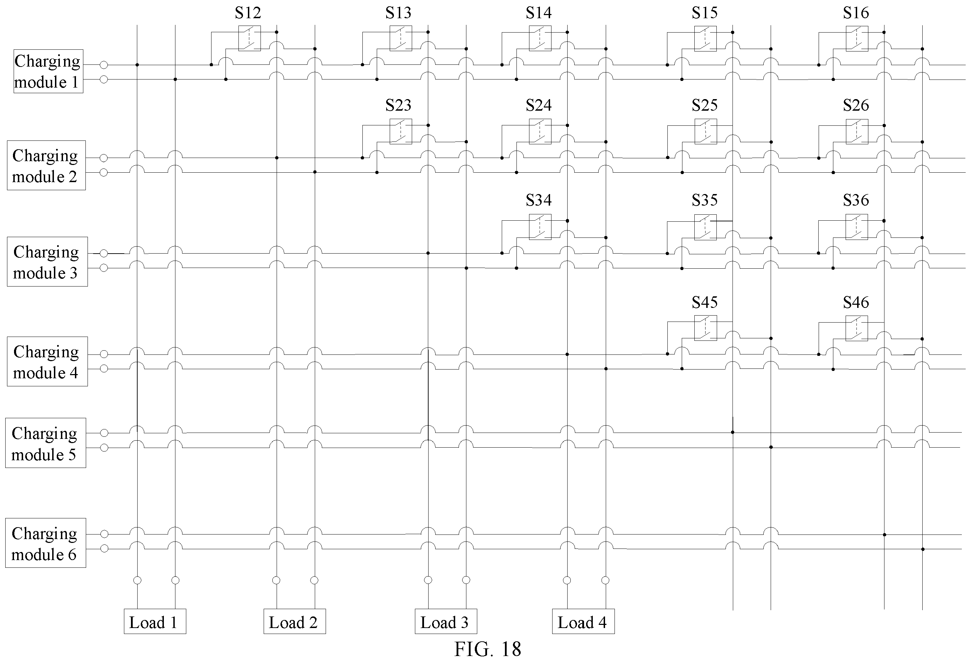

In FIG. 18, an example in which there are six power terminals and four load terminals is used. For specific power paths for any one of charging modules 1 to 4 to supply power to loads 1 to 4, refer to FIG. 9. Details are not described again.

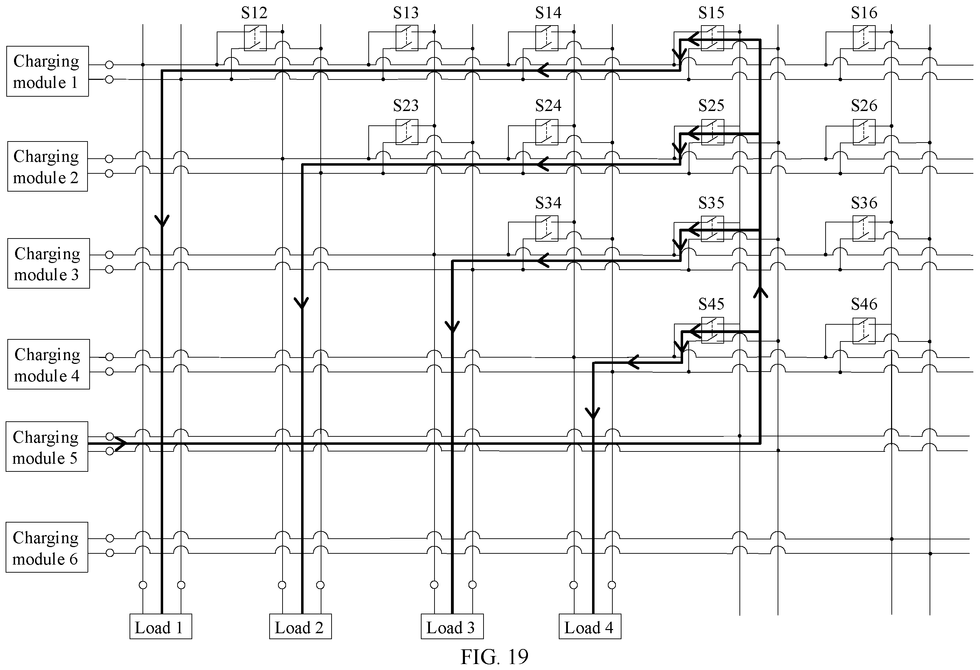

This application mainly describes a case in which a charging module 5 and a charging module 6 supply power to any load. Specifically, for example, the charging module 5 supplies power to each load. For the charging module 5, a power terminal connected to the charging module 5 is connected, through switches S15, to a load terminal connected to the load 1, so that the charging module 5 can supply power to the load 1 through the switches S15 when the switches S15 are turned on. Similarly, the charging module 5 supplies power to the load 2 through switches S25, the charging module 5 supplies power to the load 3 through switches S35, and the charging module 5 supplies power to the load 4 through switches S45. Specific power paths are shown in FIG. 19.

For example, the charging module 6 supplies power to each load. For the charging module 6, the charging module 6 supplies power to the load 1 through switches S16, the charging module 6 supplies power to the load 2 through switches S26, the charging module 6 supplies power to the load 3 through switches S36, and the charging module 6 supplies power to the load 4 through switches S46.

The following uses the power distribution apparatus shown in FIG. 18 as an example to describe a path for the charging module to supply power to the load in different cases.

### Case 1:

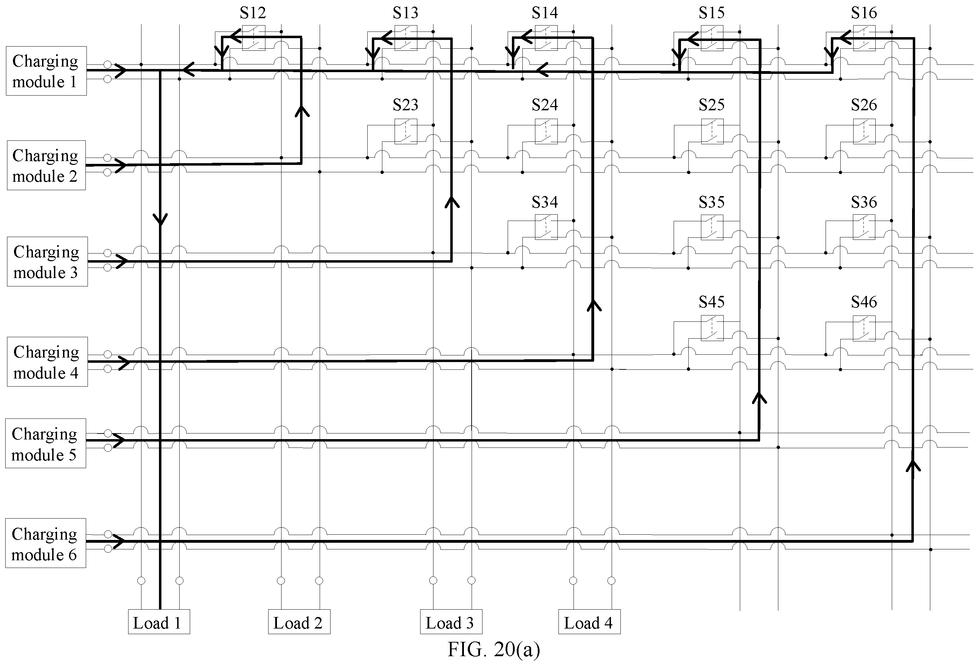

When all charging modules supply power to the load 1, for a specific power path, refer to FIG. 20(a). As shown in FIG. 20(a), the charging module 1 can directly supply power to the load 1, the charging module 2 supplies power to the load 1 through switches S12, the charging module 3 supplies power to the load 1 through switches S13, the charging module 4 supplies power to the load 1 through switches S14, the charging module 5 supplies power to the load 1 through the switches S15, and the charging module 6 supplies power to the load 1 through the switches S16.

### Case 2:

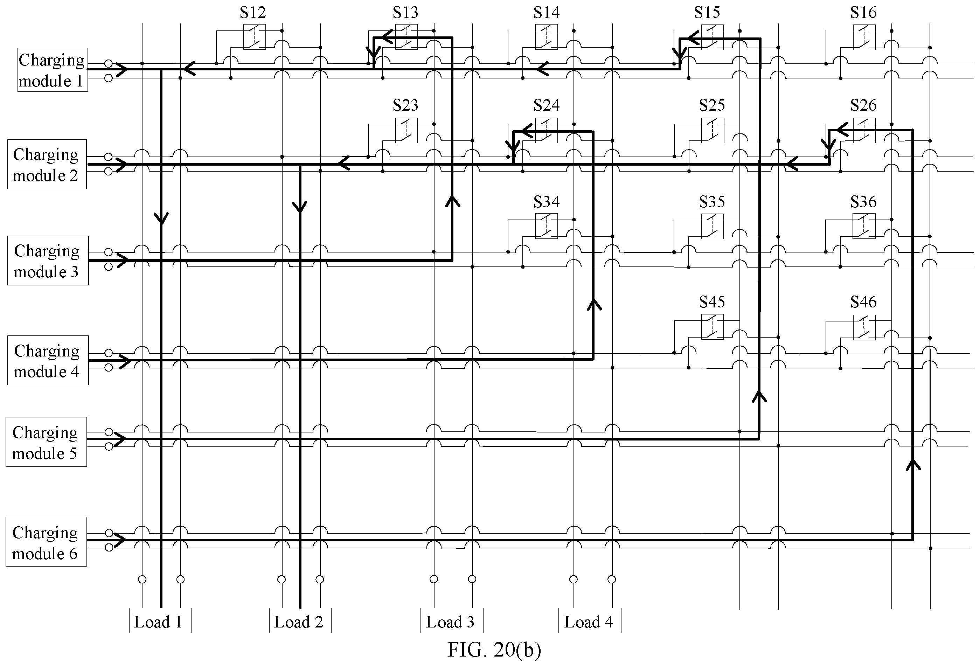

When the charging module 1, the charging module 3, and the charging module 5 supply power to the load 1, and when the charging module 2, the charging module 4, and the charging module 6 supply power to the load 2, for specific power paths, refer to FIG. 20(b). As shown in FIG. 20(b), the charging module 1 can directly supply power to the load 1, the charging module 3 supplies power to the load 1 through switches S13, and the charging module 5 supplies power to the load 1 through the switches S15. The charging module 2 can directly supply power to the load 2, the charging module 4 supplies power to the load 2 through switches S24, and the charging module 6 supplies power to the load 2 through the switches S26.

It should be understood that there are many cases in which different charging modules supply power to different loads. For brevity, details are not described herein.

It should be noted that based on a switch connection manner shown in FIG. 18, maximum currents allowed by the switches S12, S13, and S14 are a rated current of the charging module 1, maximum currents allowed by the switches S23 and S24 are a rated current of the charging module 2, a maximum current allowed by the switches S34 is a rated current of the charging module 3, maximum currents allowed by the switches S15, S25, S35, and S45 are a rated current of the charging module 5, and maximum currents allowed by the switches S16, S26, S36, and S46 are a rated current of the charging module 6. In other words, in this embodiment of this application, a maximum current allowed by each group of switches is a rated current of a charging module connected to the group of switches. In this embodiment of this application, a maximum current allowed by the switches is reduced, to reduce costs. Especially, when rated currents of all charging modules are consistent, a maximum current allowed by each of a plurality of groups of switches in the power distribution apparatus is a rated current of one charging module, to ensure that specifications of the plurality of groups of switches in the power distribution apparatus are normalized.

It should be further noted that in some possible implementations, not all power terminals in the R groups of power terminals are connected to each group of power terminals in the M groups of power terminals through switches, and a charging module connected to each group of power terminals in the R groups of power terminals can also supply power to a load connected to any load terminal.

For example, it is assumed that only the switches S15 and S16 are added to the power distribution module. For the charging module 5, the charging module 5 can supply power to the load 1 through the switches S15. The charging module 5 can supply power to the load 2 through the switches S15 and S12. The charging module 5 can supply power to the load 3 through the switches S15 and S13. The charging module 5 can supply power to the load 4 through the switches S15 and S14.

In an embodiment, the power distribution apparatus includes a plurality of power distribution modules. All load terminals of each of the plurality of power distribution modules are connected in a one-to-one correspondence.

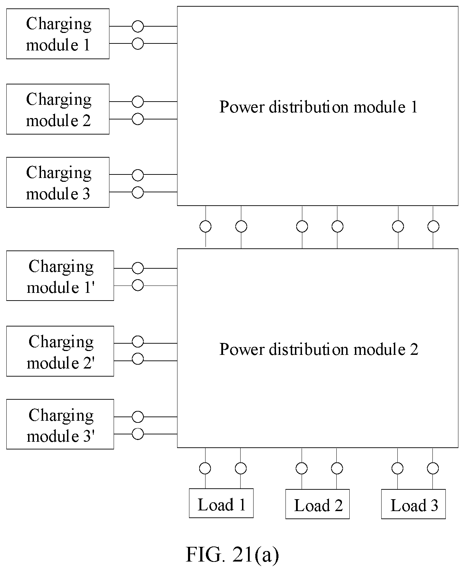

In this embodiment of this application, as shown in FIG. 21(a), an example in which the power distribution apparatus includes two power distribution modules is used. The two power distribution modules each include three groups of power terminals and three groups of load terminals. The three groups of load terminals of the two power distribution modules are connected in a one-to-one correspondence. Specifically, three groups of load terminals of a power distribution module 1 are connected to three groups of load terminals of a power distribution module 2 in a one-to-one correspondence, which is equivalent to that load terminals of the power distribution module 1 and the power distribution module 2, are connected to jointly supply power to a load.

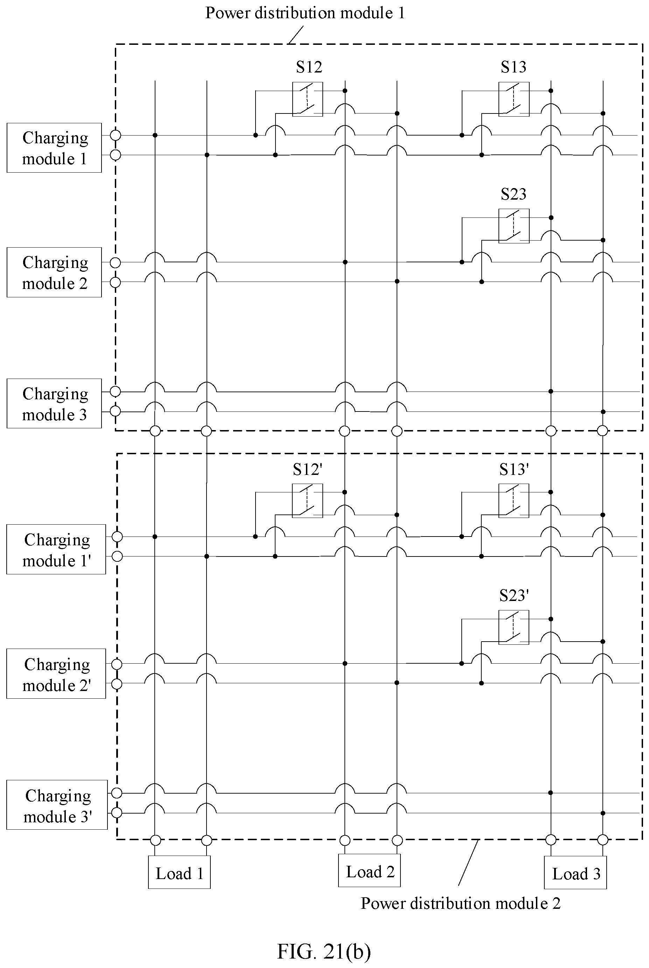

With reference to FIG. 21(b), it can be learned that a charging module 1 and a charging module 1' are directly connected to a load 1, so that the charging module 1 and the charging module 1' can jointly supply power to the load 1 when the load 1 has a power supply requirement. This can increase the power supplied to the load 2. Similarly, a charging module 2 and a charging module 2' are directly connected to a load 2, so that the charging module 2 and the charging module 2' can jointly supply power to the load 2 when the load 2 has a power supply requirement. A charging module 3 and a charging module 3' are directly connected to the load 3, so that the charging module 3 and the charging module 3' can jointly supply power to the load 3 when the load 3 has a power supply requirement.

In this embodiment of this application, because all load terminals of each of the plurality of power distribution modules in the power distribution apparatus are connected in a one-to-one correspondence, a quantity of power terminals directly connected to any load terminal increases. When a load connected to any load terminal has a charging requirement, and a quantity of charging modules directly connected to the load increases, a power input by the charging modules to the load increases, to improve a speed of supplying power to the load. When a load terminal is connected to an electric vehicle, this design can increase a charging power, accelerate charging, and improve user experience.

For example, when the power distribution apparatus is used in a fully liquid-cooled ultra-fast charging station, charging modules connected to a plurality of groups of power terminals may simultaneously supply power to a load connected to a group of load terminals. This can increase a charging power of an electric vehicle, to help meet a requirement of high-power ultra-fast charging of the electric vehicle. This helps implement a charging speed of 1 kilometer per second, that is, helps charge the electric vehicle with enough electric energy for driving 1 kilometer per second, and brings charging experience of "charge up while you coffee up" to a user.

This application further provides a charging pile. The charging pile includes a plurality of charging modules, at least one charging connector, and at least one power distribution apparatus. The power distribution apparatus includes at least one power distribution module.

The power distribution module includes M groups of power terminals, M groups of load terminals, and (M - 1) groups of switches. Each group of switches includes two switches. One of the two switches is connected between a positive electrode of the power terminal and a positive electrode of the load terminal. The other of the two switches is connected between a negative electrode of the power terminal and a negative electrode of the load terminal. The power terminal is connected to the charging module. The load terminal is connected to the charging connector. The charging connector is configured to connect to a load. M is an integer greater than or equal to 2.

The M groups of power terminals are directly connected to the M groups of load terminals in a one-to-one correspondence. An m1^{th} group of switches in the (M - 1) groups of switches is connected between an m1^{th} group of power terminals and an (m1 + 1)^{th} group of load terminals, where 1 ≤ m1 ≤ (M - 1), and m1 is an integer; or an m2^{th} group of switches in the (M - 1) groups of switches is connected between an m2^{th} group of power terminals and an (m2 - 1)^{th} group of load terminals, where 2 ≤ m2 ≤ M, and m2 is an integer.

In an embodiment, the power distribution module further includes a group of switches. The group of switches is connected between a 1^{st} group of power terminals and an M^{th} group of load terminals; or the group of switches is connected between an M^{th} group of power terminals and a 1^{st} group of load terminals.

In an embodiment, the power distribution module further includes (M - 3) * M/2 groups of switches. An m3^{th} group of switches in the (M - 3) * M/2 groups of switches is connected between an m3^{th} group of power terminals and an (m3 + i)^{th} group of load terminals, where 1 ≤ m3 ≤ (M - 2), 2 ≤ i ≤ (M - 2), and m3 and i are both integers; or an m4^{th} group of switches in the (M - 3) * M/2 groups of switches is connected between an m4^{th} group of power terminals and an (m4 - j)^{th} group of load terminals, where 3 ≤ m4 ≤ M, 2 ≤ j ≤ (M - 2), and m4 and j are both integers.

In an embodiment, the power distribution module further includes P groups of load terminals and P * M groups of switches. P is an integer greater than or equal to 1. The P * M groups of switches each are connected between each group of load terminals in the P groups of load terminals and each group of power terminals in the M groups of power terminals.

For content that is not described in detail in this embodiment of this application, refer to related content of the power distribution apparatus in the foregoing embodiments. Details are not described again.

In an embodiment, the charging pile includes a plurality of power distribution apparatuses. Each of the plurality of power distribution apparatuses includes one power distribution module. P groups of load terminals of the power distribution module in each power distribution apparatus are connected in a one-to-one correspondence.

The charging pile further includes a controller. The controller is configured to: when a load connected to at least one group of load terminals in the P groups of load terminals has a charging requirement, control switches connected between the at least one group of load terminals and the power terminal to be turned on, so that all charging modules connected to the plurality of power distribution apparatuses supply power to the load connected to the at least one group of load terminals.

In this embodiment of this application, the P groups of load terminals of the power distribution module in each power distribution apparatus are connected in a one-to-one correspondence. That is, the P groups of load terminals in each power distribution apparatus are connected to the P groups of load terminals in the other power distribution apparatuses in a one-to-one correspondence.

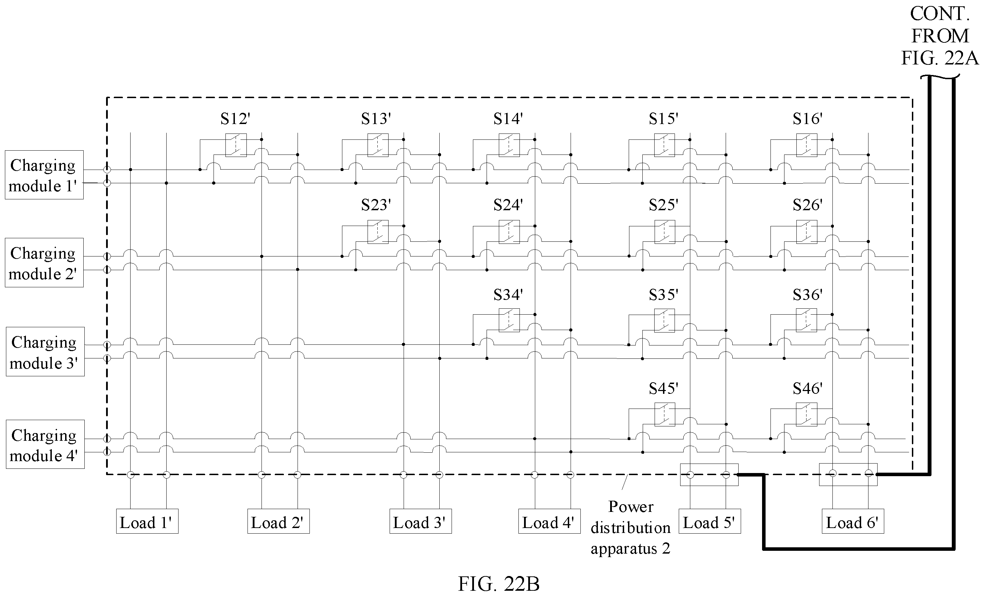

As shown in FIG. 22A and FIG. 22B, a power distribution apparatus 1 and a power distribution apparatus 2 each include four groups of power terminals and six groups of load terminals. A load terminal connected to a load 5 in the power distribution apparatus 1 is connected to a load terminal connected to a load 5' in the power distribution apparatus 2. A load terminal connected to a load 6 in the power distribution apparatus 1 is connected to a load terminal connected to a load 6' in the power distribution apparatus 2. Therefore, four charging modules in the power distribution apparatus 1 and four charging modules in the power distribution apparatus 2 can all supply power to the load 5, the load 6, the load 5', and the load 6'.

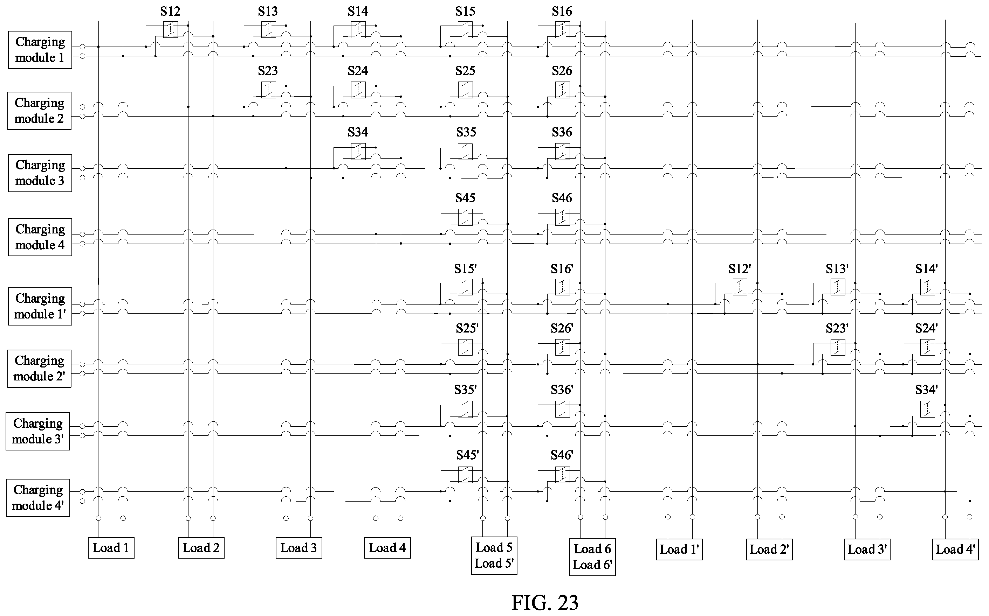

Because the load terminal connected to the load 5 in the power distribution apparatus 1 is connected to the load terminal connected to the load 5' in the power distribution apparatus 2, and the load terminal connected to the load 6 in the power distribution apparatus 1 is connected to the load terminal connected to the load 6' in the power distribution apparatus 2, it is equivalent to that 10 groups of load terminals are included in total after the two groups of load terminals in the two power distribution apparatuses are correspondingly connected, as shown in FIG. 23. The load 5 and the load 5' are connected to a same group of load terminals. The load 6 and the load 6' are connected to a same group of load terminals.

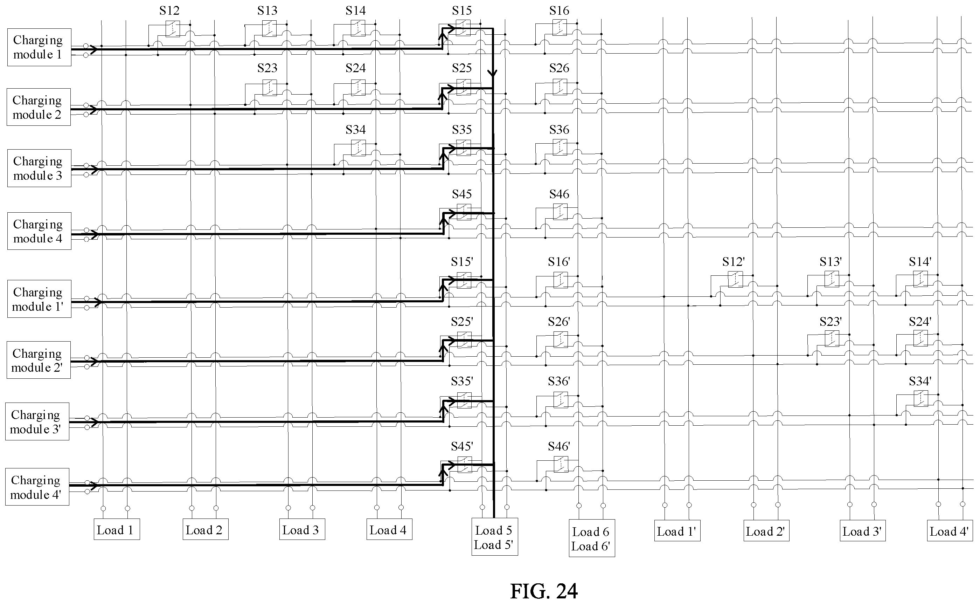

When the load 5 has a charging requirement, the controller may control switches connected between the load 5 and all charging modules to be turned on, for example, switches S15, S25, S35, S45, S15', S25', S35', and S45' shown in the figure, so that the eight charging modules can all supply power to the load 5. Specific power paths are shown in FIG. 24. When the load 5' has a charging requirement, its power supply paths are consistent with those of the load 5. Details are not described again.

When the load 6 has a charging requirement, the controller may control switches connected between the load 6 and all charging modules to be turned on, for example, switches S16, S26, S36, S46, S16', S26', S36', and S46' shown in the figure, so that the eight charging modules can all supply power to the load 6. When the load 6' has a charging requirement, its power supply paths are consistent with those of the load 6. Details are not described again.

Based on this design, the P groups of load terminals in each power distribution apparatus that are correspondingly connected may output a sum of rated powers of all charging modules connected to the plurality of power distribution apparatuses. This can increase an output power of the P groups of load terminals. When the P groups of load terminals are connected to an electric vehicle, a charging power can be increased, charging can be accelerated, and user experience can be improved.

For loads connected to the M groups of load terminals, the controller may schedule, based on different control logic, different charging modules to charge the loads. For details, refer to the following content.

In an embodiment, the controller is further configured to: when a load connected to at least one group of load terminals in the M groups of load terminals has a charging requirement, control switches connected between the at least one group of load terminals in the M groups of load terminals and the power terminal to be turned on, so that all charging modules connected to the plurality of power distribution apparatuses supply power to the load connected to the at least one group of load terminals in the M groups of load terminals.

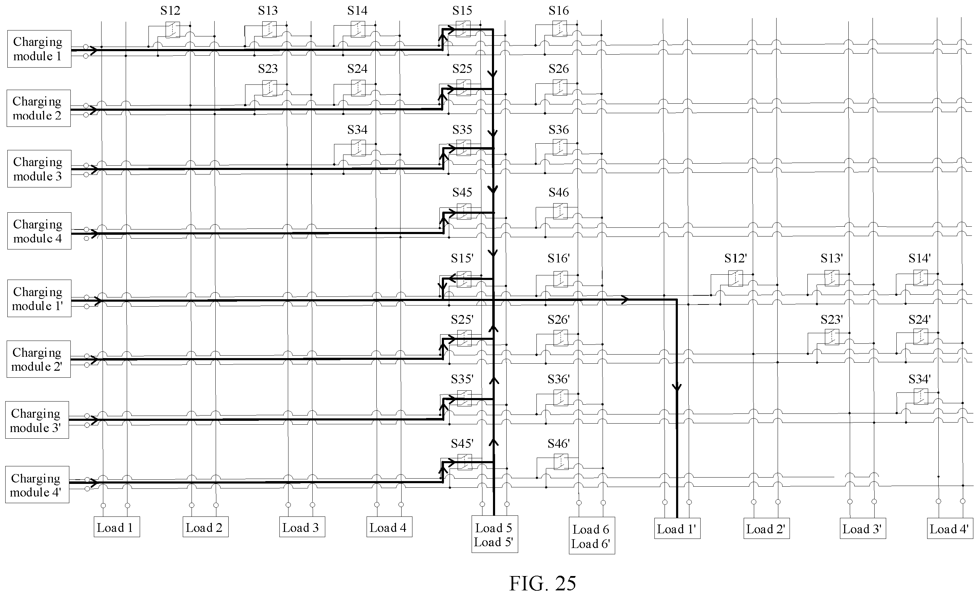

FIG. 23 is still used as an example. When a load 1' has a charging requirement, the controller may control switches connected between the load 1' and all charging modules to be turned on, for example, the switches S15, S25, S35, S45, S15', S25', S35', and S45' shown in the figure, so that the eight charging modules can all supply power to the load 1'. Specific power paths are shown in FIG. 25.

In this embodiment of this application, the M groups of load terminals in each power distribution apparatus may output a sum of rated powers of all charging modules connected to the plurality of power distribution apparatuses. This can increase an output power of the M groups of load terminals. When the M groups of load terminals are connected to an electric vehicle, a charging power can be increased, charging can be accelerated, and user experience can be improved.

It should be noted that in this case, a charging module 1' can directly supply power to the load 1' without passing through the switches S15'. A purpose of turning on the switches S15' is to guide direct currents output by the other charging modules to a path for the charging module 1' to supply power to the load 1'. For example, when a charging module 1 supplies power to the load 1', the switches S15 and S15' may be turned on, so that a direct current output by the charging module 1 is transmitted to the load 1' through the switches S15 and S15', to supply power to the load 1'. For another example, when a charging module 4' supplies power to the load 1', the switches S45' and S15' may be turned on, so that a direct current output by the charging module 4' is transmitted to the load 1' through the switches S45' and S15', to supply power to the load 1'. In other words, when all charging modules except the charging module 1' supply power to the load 1', direct currents output by the charging modules all need to pass through the switches S15'. In other words, the switches S15' collect the direct currents output by the charging modules. Therefore, a maximum current allowed by the switches S15' is a sum of rated currents of all charging modules except the charging module 1'.

Alternatively, when a charging module 1 supplies power to the load 1', the switches S16 and S16' may be turned on, so that a direct current output by the charging module 1 is transmitted to the load 1' through the switches S16 and S16', to supply power to the load 1'. For another example, when a charging module 4' supplies power to the load 1', the switches S46' and S16' may be turned on, so that a direct current output by the charging module 4' is transmitted to the load 1' through the switches S46' and S16', to supply power to the load 1'. In other words, when all charging modules except the charging module 1' supply power to the load 1', direct currents output by the charging modules all need to pass through the switches S16'. In other words, the switches S16' collect the direct currents output by the charging modules. Therefore, a maximum current allowed by the switches S16' is a sum of rated currents of all charging modules except the charging module 1'.

Similarly, a maximum current allowed by the switches S15 or the switches S16 is a sum of rated currents of all charging modules except the charging module 1; a maximum current allowed by the switches S25 or the switches S26 is a sum of rated currents of all charging modules except the charging module 2; and the like.

In summary, in some scenarios, switches in a full-matrix part serve as current collection nodes for power output. That is, the switches connected between the load 5 (or the load 5') and all charging modules and the switches connected between the load 6 (or the load 6') and all charging modules serve as current collection nodes for power output. Therefore, specifications of the switches in the full-matrix part need to be higher than those of the other switches. That is, maximum currents allowed by the switches in the full-matrix part are greater than maximum currents allowed by the other switches. The other switches include S12, S13, S14, S23, S24, S34, S12', S13', S14', S23', S24', and S34'.

It should be noted that in this embodiment of this application, when all charging modules supply power to a load connected to one group of load terminals in the M groups of load terminals, the other load terminals are kept idle as much as possible, that is, the other load terminals are not connected to loads. This is because when all charging modules supply power to a load connected to one group of load terminals in the M groups of load terminals, if the other load terminals are also connected to loads, it is equivalent that all loads are connected. This is easy to cause a fault and is not allowed in an actual scenario.

For example, when all charging modules supply power to the load 1', if the load 1 has a power supply requirement, because the charging module 1 is directly connected to the load 1, the load 1 has a connection relationship with the load 1'. If the load 1 is faulty, the fault may spread to the load 1', resulting in a fault of the load 1'.

Therefore, when all charging modules supply power to a load connected to one group of load terminals in the M groups of load terminals, the other load terminals are kept idle as much as possible, to avoid impact of a fault of one load on the other loads.

In another embodiment, the controller is further configured to: when a load connected to at least one group of load terminals in the M groups of load terminals has a charging requirement, control switches connected between the at least one group of load terminals in the M groups of load terminals and the power terminal to be turned on, so that all charging modules connected to some power distribution apparatuses supply power to the load connected to the at least one group of load terminals in the M groups of load terminals.

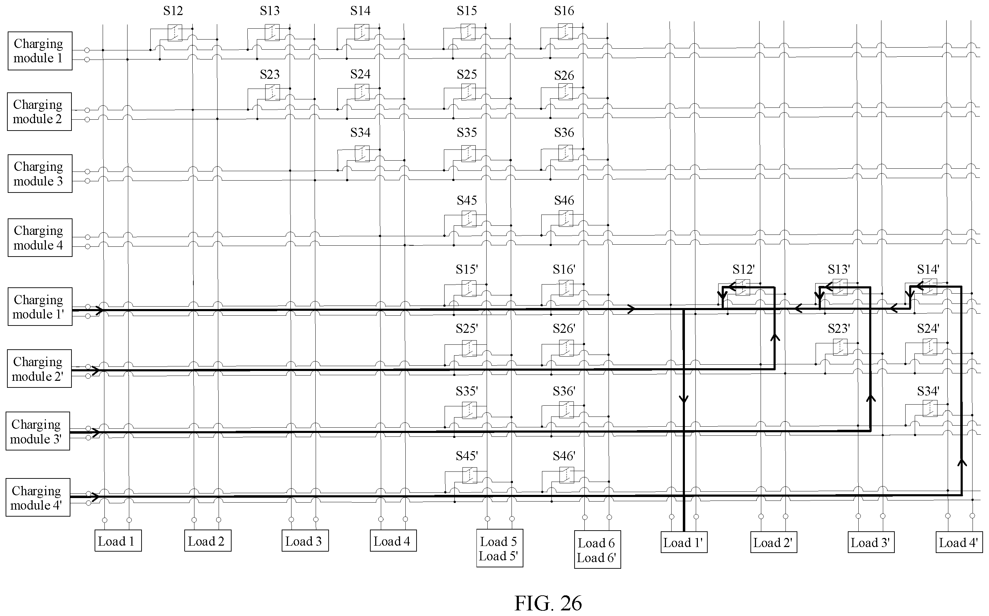

FIG. 23 is still used as an example. When a load 1' has a charging requirement, the controller may control switches connected between the load 1' and all charging modules for some power distribution apparatuses to be turned on, for example, switches S12', S13', and S14' shown in the figure, so that the charging module 1', the charging module 2', the charging module 3', and the charging module 4', can all supply power to the load 1'. Specific power paths are shown in FIG. 26.

Similarly, when a load 1 has a charging requirement, the controller may control switches connected between the load 1 and all charging modules for some power distribution apparatuses to be turned on, for example, switches S12, S13, and S14 shown in the figure, so that the charging module 1, the charging module 2, the charging module 3, and the charging module 4, can all supply power to the load 1.

It should be noted that in this case, any switches do not serve as a current collection node for power output. Therefore, selected specifications of all switches can be consistent. Especially, when rated currents of all charging modules are consistent, a maximum current allowed by each group of switches in the plurality of power distribution apparatuses is a rated current of one charging module, to ensure that specifications of a plurality of groups of switches in the plurality of power distribution apparatuses are normalized.

In an embodiment, the power distribution apparatus further includes R groups of power terminals and R * M groups of switches. R is an integer greater than or equal to 1. The R * M groups of switches each are connected between each group of power terminals in the R groups of power terminals and each group of power terminals in the M groups of power terminals.

In an embodiment, the power distribution apparatus includes a plurality of power distribution modules. All load terminals of each of the plurality of power distribution modules are connected in a one-to-one correspondence.

For content that is not described in detail in this embodiment of this application, refer to related content of the power distribution apparatus in the foregoing embodiments. Details are not described again.

In an embodiment, the charging pile further includes the controller. The controller is configured to: when one of the charging modules supplies power to a connected load through at least one group of switches and a load connected to a load terminal to which the charging module is directly connected has a charging requirement, turn off the at least one group of switches.

In this embodiment of this application, the controller preferentially schedules a charging module to supply power to a load connected to a load terminal to which the charging module is directly connected. With reference to FIG. 22A and FIG. 22B, when the load 1 has a charging requirement and a charging power required by the load 1 is a sum of powers of two charging modules, the charging module 1 and another charging module may supply power to the load 1. The charging module 1 can directly supply power to the load 1. The another charging module supplies power to the load 1. For example, the charging module 2 can supply power to the load 1 through the switches S12. When both the charging module 1 and the charging module 2 supply power to the load 1 and the load 2 has a charging requirement, the switches S12 are turned off. Because the charging module 2 is directly connected to the load 2, the charging module 2 automatically supplies power to the load 2, to meet a power supply requirement of the load 2. Because the charging module 2 stops supplying power to the load 1, an actual input power of the load 1 is reduced. The controller may schedule another charging module to supply power to the load 1. For example, the controller may turn on the switches S13, so that the charging module 3 can be scheduled to supply power to the load 1, to meet a power requirement of the load 1.

When both the charging module 1 and the charging module 2 supply power to the load 1 and the load 2 has a charging requirement, if the controller schedules the charging module 3 to supply power to the load 2, because the charging module 2 is directly connected to the load 2, the charging module 2 supplies power to both the load 1 and the load 2, resulting in a decrease in an input power of the load 1. Because a power terminal connected to the charging module 3 is connected to a 3^{rd} group of load terminals (load terminals connected to the load 3 shown in the figure), when the controller schedules the charging module 3 to supply power to the load 2, the 3^{rd} group of load terminals is energized. If the 3^{rd} group of load terminals is idle, a user may accidentally touch the load terminals, which endangers life safety of the user. In addition, when both the charging module 1 and the charging module 2 supply power to the load 1, that the charging module 3 supplies power to the load 2 is equivalent to that the load 1 is connected to the load 2. If the load 1 is faulty, the fault may spread to the load 2, resulting in a fault of the load 2. This is not allowed in an actual scenario. In a word, one charging module is not allowed to simultaneously supply power to a plurality of loads.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power distribution apparatus, wherein the power distribution apparatus comprises at least one power distribution module, the power distribution module comprises M groups of power terminals, M groups of load terminals, and (M - 1) groups of switches, each group of switches comprises two switches, one of the two switches is connected between a positive electrode of the power terminal and a positive electrode of the load terminal, the other of the two switches is connected between a negative electrode of the power terminal and a negative electrode of the load terminal, the power terminal is configured to connect to a charging module, the load terminal is configured to connect to a load, and M is an integer greater than or equal to 2;
the M groups of power terminals are directly connected to the M groups of load terminals in a one-to-one correspondence; and
an m1^{th} group of switches in the (M - 1) groups of switches is connected between an m1^{th} group of power terminals and an (m1 + 1)^{th} group of load terminals, wherein 1 ≤ m1 ≤ (M - 1), and m1 is an integer; or
an m2^{th} group of switches in the (M - 1) groups of switches is connected between an m2^{th} group of power terminals and an (m2 - 1)^{th} group of load terminals, wherein 2 ≤ m2 ≤ M, and m2 is an integer.

2. The power distribution apparatus according to claim 1, wherein the power distribution module further comprises a group of switches; and
the group of switches is connected between a 1^{st} group of power terminals and an M^{th} group of load terminals; or
the group of switches is connected between an M^{th} group of power terminals and a 1^{st} group of load terminals.

3. The power distribution apparatus according to claim 2, wherein the power distribution module further comprises (M - 3) * M/2 groups of switches; and
an m3^{th} group of switches in the (M - 3) * M/2 groups of switches is connected between an m3^{th} group of power terminals and an (m3 + i)^{th} group of load terminals, wherein 1 ≤ m3 ≤ (M - 2), 2 ≤ i ≤ (M - 2), and m3 and i are both integers; or
an m4^{th} group of switches in the (M - 3) * M/2 groups of switches is connected between an m4^{th} group of power terminals and an (m4 - j)^{th} group of load terminals, wherein 3 ≤ m4 ≤ M, 2 ≤ j ≤ (M - 2), and m4 and j are both integers.

4. The power distribution apparatus according to any one of claims 1 to 3, wherein the power distribution module further comprises P groups of load terminals and P * M groups of switches, and P is an integer greater than or equal to 1; and
the P * M groups of switches each are connected between each group of load terminals in the P groups of load terminals and each group of power terminals in the M groups of power terminals.

5. The power distribution apparatus according to any one of claims 1 to 3, wherein the power distribution module further comprises R groups of power terminals and R * M groups of switches, and R is an integer greater than or equal to 1; and
the R * M groups of switches each are connected between each group of power terminals in the R groups of power terminals and each group of power terminals in the M groups of power terminals.

6. The power distribution apparatus according to any one of claims 1 to 5, wherein the power distribution apparatus comprises a plurality of power distribution modules, and all load terminals of each of the plurality of power distribution modules are connected in a one-to-one correspondence.

7. A charging pile, comprising a plurality of charging modules, at least one charging connector, and at least one power distribution apparatus, wherein the power distribution apparatus comprises at least one power distribution module;
the power distribution module comprises M groups of power terminals, M groups of load terminals, and (M - 1) groups of switches, each group of switches comprises two switches, one of the two switches is connected between a positive electrode of the power terminal and a positive electrode of the load terminal, the other of the two switches is connected between a negative electrode of the power terminal and a negative electrode of the load terminal, the power terminal is connected to the charging module, the load terminal is connected to the charging connector, the charging connector is configured to connect to a load, and M is an integer greater than or equal to 2;
the M groups of power terminals are directly connected to the M groups of load terminals in a one-to-one correspondence; and
an m1^{th} group of switches in the (M - 1) groups of switches is connected between an m1^{th} group of power terminals and an (m1 + 1)^{th} group of load terminals, wherein 1 ≤ m1 ≤ (M - 1), and m1 is an integer; or
an m2^{th} group of switches in the (M - 1) groups of switches is connected between an m2^{th} group of power terminals and an (m2 - 1)^{th} group of load terminals, wherein 2 ≤ m2 ≤ M, and m2 is an integer.

8. The charging pile according to claim 7, wherein the power distribution module further comprises a group of switches; and
the group of switches is connected between a 1^{st} group of power terminals and an M^{th} group of load terminals; or
the group of switches is connected between an M^{th} group of power terminals and a 1^{st} group of load terminals.

9. The charging pile according to claim 8, wherein the power distribution module further comprises (M - 3) * M/2 groups of switches; and
an m3^{th} group of switches in the (M - 3) * M/2 groups of switches is connected between an m3^{th} group of power terminals and an (m3 + i)^{th} group of load terminals, wherein 1 ≤ m3 ≤ (M - 2), 2 ≤ i ≤ (M - 2), and m3 and i are both integers; or
an m4^{th} group of switches in the (M - 3) * M/2 groups of switches is connected between an m4^{th} group of power terminals and an (m4 - j)^{th} group of load terminals, wherein 3 ≤ m4 ≤ M, 2 ≤ j ≤ (M - 2), and m4 and j are both integers.

10. The charging pile according to any one of claims 7 to 9, wherein the power distribution module further comprises P groups of load terminals and P * M groups of switches, and P is an integer greater than or equal to 1; and
the P * M groups of switches each are connected between each group of load terminals in the P groups of load terminals and each group of power terminals in the M groups of power terminals.

11. The charging pile according to claim 10, wherein the charging pile comprises a plurality of power distribution apparatuses, each of the plurality of power distribution apparatuses comprises one power distribution module, and P groups of load terminals of the power distribution module in each power distribution apparatus are connected in a one-to-one correspondence; and
the charging pile further comprises a controller, and the controller is configured to:
when a load connected to at least one group of load terminals in the P groups of load terminals has a charging requirement, control switches connected between the at least one group of load terminals and the power terminal to be turned on, so that all charging modules connected to the plurality of power distribution apparatuses supply power to the load connected to the at least one group of load terminals.

12. The charging pile according to claim 11, wherein
the controller is further configured to: when a load connected to at least one group of load terminals in the M groups of load terminals has a charging requirement, control switches connected between the at least one group of load terminals in the M groups of load terminals and the power terminal to be turned on, so that all charging modules connected to the plurality of power distribution apparatuses supply power to the load connected to the at least one group of load terminals in the M groups of load terminals.

13. The charging pile according to any one of claims 7 to 12, wherein the power distribution apparatus further comprises R groups of power terminals and R * M groups of switches, and R is an integer greater than or equal to 1; and
the R * M groups of switches each are connected between each group of power terminals in the R groups of power terminals and each group of power terminals in the M groups of power terminals.

14. The charging pile according to any one of claims 7 to 13, wherein the charging pile further comprises the controller; and
the controller is configured to: when one of the charging modules supplies power to a connected load through at least one group of switches and a load connected to a load terminal to which the charging module is directly connected has a charging requirement, turn off the at least one group of switches.

15. The charging pile according to any one of claims 7 to 10, wherein the power distribution apparatus comprises a plurality of power distribution modules, and all load terminals of each of the plurality of power distribution modules are connected in a one-to-one correspondence.
